(19) **Europäisches Patentamt**
**European Patent Office**
**Office européen des brevets**

(11) **EP 1 568 475 B1**

(12) **EUROPEAN PATENT SPECIFICATION**

(45) Date of publication and mention
of the grant of the patent:
**12.02.2014  Bulletin 2014/07**

(51) Int Cl.:
*B29D 30/26* (2006.01)     *B29D 30/20* (2006.01)
*B65G 35/06* (2006.01)     *B29D 30/10* (2006.01)

(21) Application number: **03775878.6**

(22) Date of filing: **25.11.2003**

(86) International application number:
**PCT/JP2003/015034**

(87) International publication number:
**WO 2004/048075 (10.06.2004 Gazette 2004/24)**

(54) **TIRE BUILDING SYSTEM AND TIRE MANUFACTURING METHOD USING THIS SYSTEM**

REIFENFORMSYSTEM UND REIFENHERSTELLUNGSVERFAHREN MITTELS DIESES
REIFENFORMSYSTEMS

SYSTEME DE MOULAGE DE PNEUMATIQUES ET PROCEDE DE FABRICATION D'UN
PNEUMATIQUE EN UTILISANT CE SYSTEME

(84) Designated Contracting States:
**DE FR HU IT**

(30) Priority: **25.11.2002  JP 2002341206**
**25.11.2002  JP 2002341275**

(43) Date of publication of application:
**31.08.2005  Bulletin 2005/35**

(73) Proprietor: **Bridgestone Corporation**
**Tokyo 104-8340 (JP)**

(72) Inventors:
• **AKIYAMA, Naruhiro,**
**BRIDGESTONE CORPORATION**
**Kodaira-shi,**
**Tokyo 187-8531 (JP)**
• **OGAWA, Yuichiro,**
**BRIDGESTONE CORPORATION**
**Kodaira-shi,**
**Tokyo 187-8531 (JP)**

• **MINAKAWA, Masataka,**
**BRIDGESTONE CORPORATION**
**Kodaira-shi,**
**Tokyo 187-8531 (JP)**

(74) Representative: **Waldren, Robin Michael et al**
**Marks & Clerk LLP**
**90 Long Acre**
**London**
**WC2E 9RA (GB)**

(56) References cited:
EP-A- 0 709 179      EP-A- 1 092 530
EP-A- 1 125 708      EP-A- 1 215 024
EP-A1- 0 555 813     EP-A2- 1 295 701
WO-A- 00/12297       WO-A- 01/32409
WO-A1-01/39963       WO-A1-02/16118
DE-A1- 19 514 353    JP-A- 4 014 437
JP-A- 8 011 232      JP-A- 2002 254 529
JP-A- 2002 326 288   JP-A- 2003 039 573
JP-Y2- 2 522 672     US-A- 4 314 864
US-A- 4 314 864      US-A- 4 443 290
US-A1- 2001 017 094  US-B1- 6 425 478

**Description**

TECHNICAL FIELD

The present invention relates to a tire building system to be preferably used to move building carriages which support tire building drums thereon, respectively, on a track, while mounting tire components onto the building drums in a required order at workstations disposed along the track, respectively, and to a tire manufacturing method.

BACKGROUND ART

Various tire building systems have been conventionally proposed to move carriages which support tire building drums thereon, respectively, on rails, for example, while mounting tire components onto the building drums in a required order at workstations disposed along the rails, respectively.

Meanwhile, although positional accuracies such as the degree of horizontality of building drums and the degree of parallelism thereof relative to the workstations considerably affect building accuracy of tires and thus quality of product tires when the tires are to be built while moving the building drums in the above manner, most of the conventional carriages have been configured to move building drums by rolling flanged wheels provided on the carriages on rails, thereby failing to position the building drums with a sufficient accuracy particularly in a direction intersecting a traveling direction of the carriages insofar as the carriages are merely stopped at predetermined positions on the rails. This is particularly serious in case of increased plays between the wheels and the rails so as to cause the building carriages to travel not only on straight rail portions but also on curved rail portions.

As such, in case of using such carriages, it has been required to lift up carriages themselves and to conduct centering and positioning thereof with a required accuracy after the carriages are stopped, for positioning of the building drums with a higher precision.

However, conducting such centering and positioning in this way causes problems that a tact time is prolonged to deteriorate a working efficiency, that positioning accuracy tends to be deteriorated due to wear of centering and positioning parts which also manage the lifting up of carriages, that noises and vibrations such as accompanying to lifted and lowered displacements of the carriages are necessarily caused, and that possibility of trouble of the rails and the like is increased, thereby requiring frequent maintenance.

It has been thus recently proposed to guide traveling of a carriage by guiding means comprising a combination of rails and a slide table of a ball circulation type, and by virtue of this guiding means which is a so-called "linear motion guide", stopping and positioning of the carriage can be conducted with a sufficiently high precision in the traveling direction and the direction intersecting the same, respectively, thereby advantageously eliminating the necessity of a time for lifting, centering and positioning the carriage and the necessity of provision of a specific operating mechanism.

However, since the rails and slide table for such guiding means are engaged with each other with a higher fitting accuracy only for the purpose of a linear movement such that the guiding means substantially fails to guide the traveling of the carriage along an arcuate curved portion, it has been required to lay a plurality of straight rails and to transfer the carriage onto neighboring rails whenever the carriage is changed in traveling direction to thereby guarantee a higher positioning accuracy at each stopping position of the carriage, for a demand to cause the carriage to be circularly traveled in an endless manner for an improved tire building work efficiency.

Thus, the proposed technique suffers from another problem that the working time required for transferring the carriage from one group of rails to another group of rails prolongs a tact time for tire building, and a spatial problem that it is inevitable to reserve a plurality of occupying spaces for carriage transference within a tire building yard.

It is therefore an object of the present invention to provide a tire building system configured to allow each building carriage supporting a building drum thereon to smoothly travel on an endless track which is substantially oval, substantially elliptical or the like including arcuate curved portions with a constantly higher engagement accuracy of the carriage with the track without transference and the like to thereby simply reserve a stopping position accuracy of the building carriage, thereby allowing positional accuracies of the building drum and the building carriage on the track in the respective directions, to thereby eliminate: a prolonged tact time of the tire building; the necessity of specific occupying spaces for endless circulative traveling; increased noises and vibrations; and an early deterioration of positioning accuracy.

In turn, tire building systems, particularly those for building green tires have been recently highly developed and complicated in view of the background of demand for an improved tire quality and an improved productivity so that a tire producing capability is demanded to be enhanced while restricting occupying spaces and cost of the building systems. There have been thus proposed those systems provided with workstations where pertinent tire components are to be mounted onto each building drum as required in a manner to convey a tire in the course of building among the workstations with a predetermined tact time to thereby build a green tire, instead of providing a multiple of conventional tire building machines for mounting various tire components onto a building drum in a predetermined order at one place.

As disclosed in International Publication WO 01/39963, one of such systems is configured to move a rigid core having a toroidal core cross-section to successively mount tire components onto this rigid core at respective workstations to thereby form a green tire, thereafter to vulcanize the tire together with the rigid core still attached thereto, and finally to detach the vulcanized tire from the rigid core.

Although the thus proposed building system allows for manufacturing of a tire with a higher precision since each tire is not detached from the rigid core from a building process up to termination of a vulcanizing process, this system includes the following problems.

The first problem is that, since the tire components are mounted onto the rigid core having a predetermined shape, there is obliged a change of structure of tire from the conventional, for example, such that a conventional structure including one or more layers of carcass plies to be folded back around bead cores toward radial outside of the tire can not be adopted, thereby causing obligation to adopt a new tire structure for fixing the carcass to the bead cores, but reliability for such a new tire structure has not been sufficiently established yet.

The second problem is that, the rigid core to be used upon building a green tire and upon vulcanizing the built green tire is required to be held at an ordinary temperature during a building process while the rigid core is required to be heated during a vulcanizing process, thereby uselessly wasting energy and time for heating and cooling the rigid core, for example.

Also known from and disclosed in JP 002-254529A as another proposal different from the above, is a tire building system configured to bulgingly deform an axial center portion of a cylindrical carcass band, and then to move a tire in the course of building through a plurality of workstations while holding the bulged portion by a core device, so as to mount applicable tire components onto an outside of the carcass band at the respective stations.

However, in this tire building system, the tire components are successively mounted onto the tire in the course of building in a state that bead cores are not held by a building drum, resulting in deviation of relative positions of the bead cores and tire components from one another, thereby problematically failing to manufacture a tire with high precision.

It is therefore another object of the present invention to provide a tire building system, a tire manufacturing method having the same, and a tire manufacturing method capable of building a tire with a higher precision, without considerably changing a conventionally established tire structure, and without wasting energy and time for heating and cooling a rigid core.

WO01/32409 and US4,443,290 relate to tire manufacturing technologies, in which tires are transferred between workstations by robotized arms and a conveyor respectively. JP2002-254529 and JP2002-326288 disclose molding methods for tires, in which a radially expandable core device is provided.

Earlier document EP-A-1 295 701 discloses a further tire building system and a further tire manufacturing method.

## DISCLOSURE OF THE INVENTION

The present invention provides a tire building system as claimed in claim 1.

According to this tire building system, since the workstations are configured to mount applicable tire components onto a tire in the course of building and having the locked bead cores, respectively, and the toroidal building drum supported by the building carriage moving throughout the workstations comprises the bead lock portions and the scalable rigid core body; it becomes possible to mount the applicable tire components including belt members onto an outer peripheral side of the tire in the course of building while fixing the bead cores of the tire on the building drum to manufacture a geen tire with a higher precision, and it becomes possible to build a tire having the typical structure as conventional because there is not used a rigid core having a fixed shape such as disclosed in the above-mentioned International Publication pamphlet, without uselessly wasting time and energy for heating and cooling such a rigid core.

Incidentally, according to another tire building system further comprising a first building unit configured to deliver a cylindrical carcass band to the above-mentioned building unit as a second building unit, wherein the first building unit comprises: a cylindrical building drum configured to form the cylindrical carcass band; a building carriage configured to rotatably support the building drum; a plurality of workstations configured to mount applicable tire components onto the cylindrical building drum; and an endless or ended track configured to guide a movement of the building carriage among the workstations; particularly at the first building unit, the cylindrical building drum forms thereon the cylindrical carcass band which exhibits a negligible affection even when deformed toroidally in a postponed manner, thereby enabling an effective shape of the band, and enabling the single type of drum to deal with numerous sizes of tires by virtue of the simple cylindrical shape of the drum.

It is preferable here that the track of the second building unit is made endless.

This enables each building carriage supporting the toroidal building drum to be circularly moved, so that multiple building carriages can be synchronously moved throughout numerous workstations in a constant tact time even when the workstations are arranged along the track.

In this case, it is preferable that the endless track has a pair of mutually substantially parallel straight portions, and the workstations are arranged correspondingly to both the straight portions and along them, respectively.

According to this configuration, it becomes possible to arrange a supplying apparatus of tire components corresponding to each workstation outside the same relative to the endless track, and to minimize an inside space of the endless track, thereby enabling a shorter aspect ratio of the tire building system to thereby compactize the system.

In turn, it is desirable that the track of the first building unit is made straight.

This allows the first building unit to be sufficiently compactized, by providing a fewer workstations of the first building unit at both sides of the straight track of the first building unit.

The present invention further provides a tire manufacturing method as claimed in claim 7. Particular embodiments of the invention are the subject of the respective dependent claims. The tire manufacturing method according to the present invention and using the system described above sequentially moves a tire, in the course of building, through a plurality of workstations included in a building system to thereby sequentially mount tire components previously determined correspondingly to the workstations, respectively, onto the tire to thereby build the same into a green tire, the method comprising the steps of: sequentially, at one or more of the workstations, disposing a cylindrical carcass band and a pair of bead cores onto a toroidally scalable toroidal building drum to thereby lock the bead cores, radially expanding the building drum to toroidally extend the carcass band between both bead cores, and turning back side portions of the carcass band to radial outsides around the bead cores, respectively; and thereafter, at another or other workstations, mounting tire components including sidewall members onto the carcass band and bead cores while the bead cores are kept locked on the toroidal building drum, to thereby build them into a green tire; and radially contracting the toroidal building drum, and unlocking the bead cores to detach the green tire from the building drum.

According to this manufacturing method, tire components including sidewall members, belt members and the like can be mounted in a state where bead cores of a tire in the course of building are fixed at the building drum as described above to allow a tire to be manufactured with a higher precision, there can be further built a tire having the conventional structure because a rigid core of a fixed shape is not used, and it becomes unnecessary to waste useless energy for heating and cooling such a rigid core.

Further, according to this method, sidewall members are mounted onto a tire in the course of building which is bulged and deformed toroidally and the bead cores of which are locked, so that deformation of the sidewall members can be minimized to build a green tire with a higher precision, as compared with other methods each including steps of disposing sidewall members onto opposite sides of a cylindrical carcass band in an axial direction thereof on a cylindrical drum, and then folding back and mounting them together with side portions of the carcass band around bead cores, respectively.

BRIEF DESCRIPTION OF THE DRAWINGS

FIG. 1 is a plan arrangement view of an embodiment of a tire manufacturing system according to the present invention;
FIG. 2 is a plan arrangement view of a tire building system;
FIG. 3 is a cross-sectional view of a tire in the course of building;
FIG. 4 is another cross-sectional view of the tire in the course of building;
FIG. 5 is still another cross-sectional view of the tire in the course of building;
FIG. 6 is yet another cross-sectional view of the tire in the course of building;
FIG. 7 is a still further cross-sectional view of the tire in the course of building;
FIG. 8 is a yet further cross-sectional view of the tire in the course of building;
FIG. 9 is an explanatory view of a ribbon laminating method;
FIG. 10 is an explanatory view of a constant width strip method;
FIG. 11 is an enlarged essential-part cross-sectional view of an application example of a tire building system according to the present invention to a second building unit;
FIG. 12 is a partially cross-sectional front view illustrating a carriage;
FIG. 13 is a schematic plan view of an engagement state of a wheel with a rail;
FIG. 14 is a schematic plan view of another engagement state of a wheel with a rail;
FIG. 15 is a schematic plan view of an engagement state of the wheel with an arcuate portion;
FIG. 16 is an explanatory view of relative widths of a straight portion and an arcuate portion;
FIG. 17 is a schematic side view of a building carriage illustrating an attachment example of wheels;
FIG. 18 is a schematic plan view of an attachment structure example of wheels;
FIG. 19 is a side view illustrating an engaged/supported state of a free end of a building drum;
FIG. 20 is a plan arrangement view of a tire vulcanizing system;
FIG. 21 is a side view of a mobile vulcanizing unit;
FIG. 22 is a front view of vulcanizing stations and a mold opening/closing station;
FIG. 23 is a plan view of the vulcanizing stations and the mold opening/closing station;
FIG. 24 is an arrangement view of a tire manufacturing system according to another embodiment;
FIG. 25 is an arrangement view of another tire manufacturing system;
FIG. 26 is an arrangement view of still another tire manufacturing system; and
FIG. 27 is an arrangement view of yet another tire manufacturing system.

BEST MODE FOR CARRYING OUT THE INVENTION

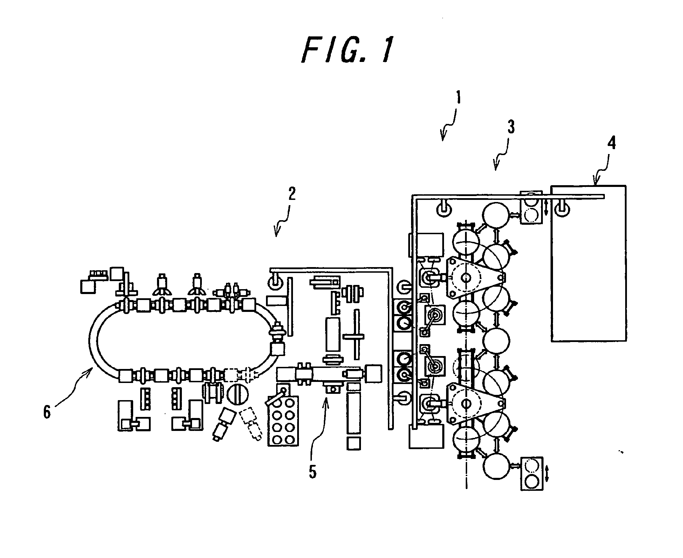

Shown in a schematic plan view of FIG. 1 is a tire manufacturing system 1 comprising a tire building system 2, a tire vulcanizing system 3, and a tire inspecting system 4.

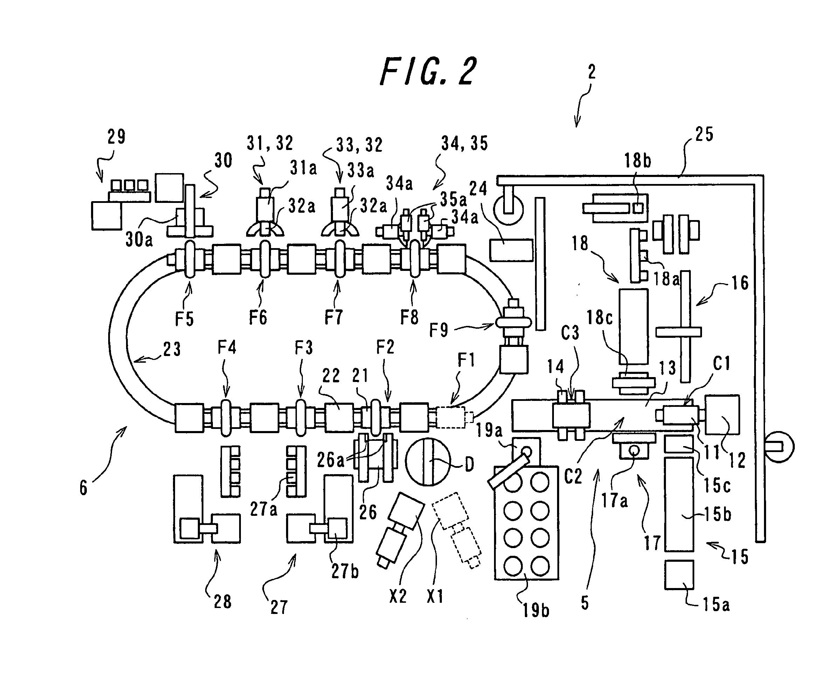

There will be firstly explained the tire building system 2 and a tire manufacturing method in case of building green tires, based on a plan view of the tire building system as enlarged shown in FIG. 2.

The tire building system 2 comprises mutually adjacently arranged first building unit 5 and second building unit 6, and the first building unit 5 comprises: three workstations C1, C2, C3; a cylindrical building drum 11; a first building carriage 12 for cantilever supporting the cylindrical building drum 11 and rotating it around its main axis; a transfer carriage 13; and a straight track 14 for guiding a movement of the first building carriage 12 between the workstations C1, C2, C3.

The second building unit 6 comprises: nine workstations F1 through F9; toroidal building drums 21; second building carriages 22 for supporting the toroidal building drums 21 and for rotating them around main axes thereof, respectively; and an endless track 23 for guiding a movements of the second building carriages 22 among the workstations F1 through F9; as well as a green tire transferring carriage 24 for a tire the building of which is completed, and a green tire conveyor 25 for conveying a green tire to the vulcanizing system.

Here, the first building carriage 12 equipped with the cylindrical building drum 11 repeats its movement in a predetermined tact time in an order of from the workstation C1 to workstation C2, from C2 to C3, and from C3 to C1, and the transfer carriage 13 repeats its reciprocal movement between the workstation C3 and the workstation F1. Further, each second building carriage 22 equipped with the associated toroidal building drum 21 repeats a clockwise movement among the associated workstations in a predetermined tact time, in a direction from the workstation F1 to the workstation F2, for example.

In the illustrated tire building system 2, the first building carriage 12 is provided by one in number and the second building carriages 22 are provided by eight in number, and the carriages 12, 22 are all moved among the associated stations by driving apparatus (not shown) such that each carriage is stopped at a pertinent station and is then positioned with a higher precision particularly by a forward/rearward positioning apparatus provided at the station.

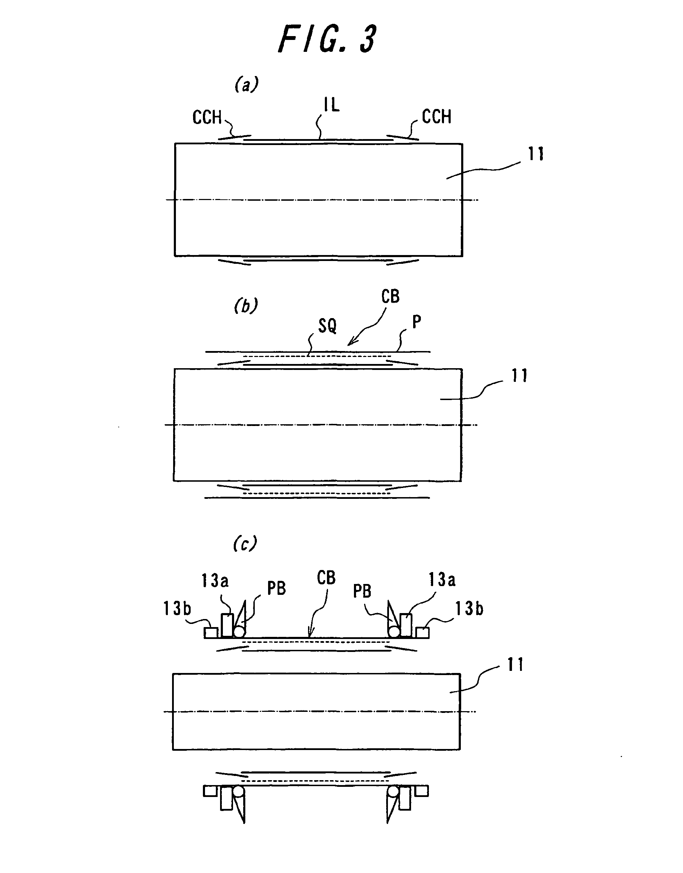

FIG. 3 through FIG. 8 are radial cross-sectional views of a tire at steps in the course of building by such a building system 2 and including central axes of the drums, respectively. Firstly, at the workstation C1, there are used an inner liner member mounting apparatus 15 and a canvas chafer member mounting apparatus 16 to mount an inner liner member IL and canvas chafer members CCH to be arranged at outer peripheries thereof onto the cylindrical building drum 11 as shown in FIG. 3 (a), and then the cylindrical building drum 11 is moved to the workstation C2 at which a squeegee member mounting apparatus 17 and a carcass member mounting apparatus 18 are used to mount one layer or two layers of squeegee member SQ and one layer or two layers of carcass member P onto outer peripheries of the inner liner member IL and canvas chafer members CCH to form a carcass band CB as shown in FIG. 3(b).

Note that although FIG. 3(b) shows a situation where the squeegee member SQ and carcass member P are each mounted in one layer, they are mounted in an order of an inner layer side squeegee member SQ, an inner layer side carcass member P, an outer layer side squeegee member SQ, and an outer layer side carcass member P, when they are both provided in two layers.

Incidentally, the cylindrical building drum 11 here is configured with a plurality of circumferentially divided and radially scalable segments, and the abovementioned tire components are arranged on an outer periphery of the cylindrical building drum 11 in a radially expanded posture.

Meanwhile, at the workstation C3, previously set on the transfer carriage 13 are a pair of preset beads PB each including a bead filler preset on an associated bead core, and the carcass band CB is conveyed to a radial inside of the prepared pair of preset beads PB as shown in FIG. 3(c).

Namely, the transfer carriage 13 is provided with scalable bead retaining rings 13a for retaining the preset beads PB from side surfaces thereof, respectively, and scalable band retaining rings 13b for retaining the carcass band CB from its radial outside, and at the workstation C3, the preset bead PB taken out of a bead stock 19b by a bead handling robot 19a is transferred to the band gripping rings 13b and retained thereby, thereafter the transfer carriage 13 is kept stand-by as it is, and then the cylindrical building drum 11 having the carcass band CB mounted thereon is inserted up to a predetermined axial position radially inside the pair of preset beads PB.

Thereafter, the band gripping rings 13b are radially contracted to grip the carcass band CB from its radial outside, and the cylindrical building drum 11 is radially contracted as shown in FIG. 3(c) concurrently with the above to thereby transfer the carcass band CB from the cylindrical building drum 11 onto the transfer carriage 14.

Note that although the preset beads PB each having the bead filler and bead core previously preset thereon have been set on the transfer carriage 13 in the above description, it is alternatively possible to set only bead cores onto the transfer carriage 13 at the workstation C3 and to mount bead fillers at the workstation F2 to be described later in detail or at another dedicated workstation to be added.

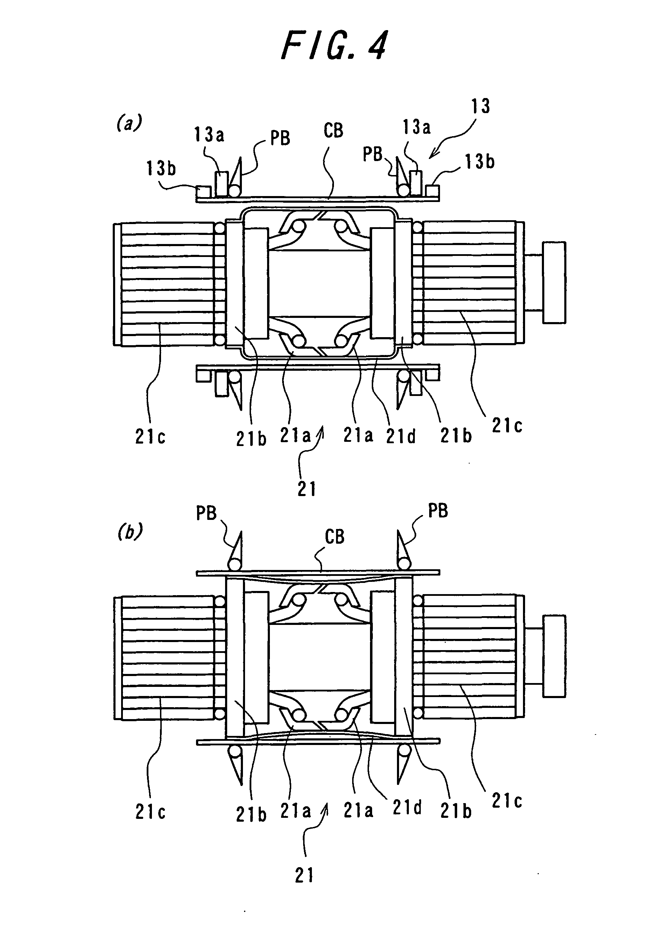

Next, the transfer carriage 13 gripping the preset beads PB and carcass band CB is moved to the workstation F1 where an applicable toroidal building drum 21 is kept stand-by as shown in FIG. 4(a), at which both the preset beads PB and carcass band CB are transferred onto the toroidal building drum 21 as shown in FIG. 4(b).

Details of this transferring step are as follows.

Each toroidal building drum 21 comprises: a pair of right and left core bodies 21a each comprising a plurality of scalable and displaceable rigid segments circumferentially neighbored to each other; a pair of right and left bead lock portions 21b each also comprising a plurality of scalable and displaceable rigid segments circumferentially neighbored to each other; a plurality of circumferentially arranged carcass folding-back bars 21c provided at right and left axial end portions; and a center bladder 21d formed of a flexible material, which is arranged at a radial outside of the core bodies 21a, and which is toroidally bulged by supplying an internal pressure thereto; in which the core bodies 21a, bead lock portions 21b, and the carcass folding-back bars 21c located at the same right and left sides, respectively, are provided on right and left sliders, respectively, so that these members 21a, 21b, 21c are configured to be integrally displaced to axial inside and outside, respectively.

Thus, the transfer carriage 13 gripping the preset beads PB by the bead retaining rings 13a and the carcass band CB by the band gripping rings 13b is directly moved to the workstation F1 as shown in FIG. 4(a), they are arranged onto outside of the applicable toroidal building drum 21 kept stand-by in a radially contracted state by shifting the bead lock portions 21b to axial end sides, thereafter the bead retaining rings 13a and band gripping rings 13b are radially expanded in the state where the bead lock portions 21b are radially expanded to fix the preset beads PB on the toroidal building drum 21 so as to release the restraint by the rings 13a, 13b, and then the transfer carriage 13 is returned to the workstation C3, thereby allowing the preset beads PB and carcass band CB to be transferred onto the applicable toroidal building drum 21.

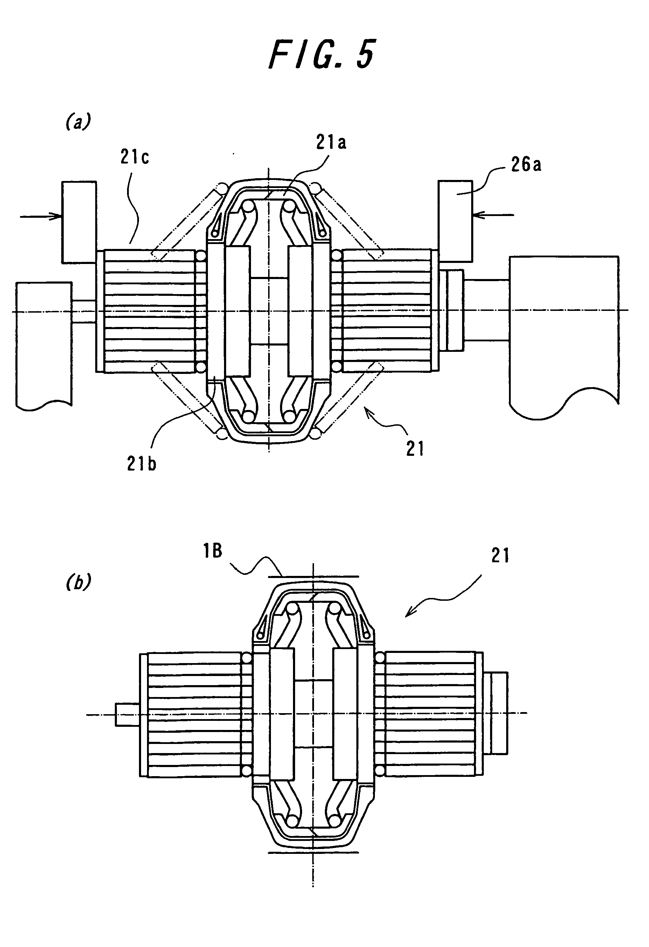

Thereafter, the toroidal building drum 21 is moved to the workstation F2, and as shown in FIG. 5(a), the axial center portion of the carcass band CB is toroidally bulged and deformed, and the side portions of the carcass member P are turned back to radial outsides, respectively.

This step can be conducted as follows.

The center bladder 21d is bulged and deformed by applying an internal pressure thereto while the sliders at both sides equipped with the bead lock portions 21b and the like are moved toward as axial center portion; the right and left core bodies 21a are radially expanded consonantly therewith to bulge and deform the axial center portion of the carcass band CB; in the course of this bulging and deforming, pawls 26a provided in an external driving apparatus 26 and engaged with rear ends of the carcass folding-back bars 21c are moved toward an axial center side of the building drum 21 to thereby cause the respective carcass folding-back bars 21c to be displaced to advance in the same direction; so that tip ends of the carcass folding-back bars 21c are displaced along side surfaces of the core bodies 21a partially and radially expanded by a link mechanism (not shown), thereby allowing the side portions of the carcass member P to be turned back around the preset beads PB, respectively.

Thereafter, the core bodies 21a are expanded to the maximum diameter so that these core bodies are caused to exhibit a function for supporting, from a radial inside, tire components to be subsequently mounted onto these core bodies, and thus for supporting the mounting external forces for such tire components, to thereby sufficiently enhance mounting accuracies of these tire components.

Further, it is possible to measure a waveform for a full circumference of a radial run-out of the toroidally bulged and deformed carcass band at this workstation F2. Here, the waveform of the radial run-out of the toroidally bulged and deformed carcass band CB refers to a waveform of a circumferential change of a radius distance from a rotational axis of the building drum at an axial center of the bulged carcass band.

Then, its primary harmonic component's phase $\phi$ and amplitude Y are fed back to the working operations at the workstations C3 and F1 as previously described. Namely, one of both bead retaining rings 13a of the transfer carriage 13 kept stand-by at the workstation C3 is configured to be continuously controlled in axial orientation in a predetermined direction such as within a horizontal plane, such that preset beads PB are set on the bead retaining rings 13a at the workstation C3 and then the axis of the applicable bead retaining ring 13a is inclined by an angle $\alpha$ to be uniquely obtained from the amplitude Y measured at the workstation F2. The angle $\alpha$ means an angle required to cancel the amplitude Y.

Next, at the workstation F1, the applicable building drum 21 set at a circumferential reference position is rotated by the phase $\phi$ measured at the workstation F2.

By these operations, the information on the primary harmonic component of the radial run-out of the toroidally bulged and deformed carcass band CB is fed back to a tire to be built after measurement of the radial run-out waveform, thereby allowing cancellation of the primary harmonic component of the radial run-out to improve the radial run-out, thereby improving a level of RVF of a product tire which is related to the radial run-out.

Although each building drum 21 has been provided with the associated center bladder 21d and the center bladder 21d is supplied with an internal pressure to thereby toroidally bulge and deform an associated carcass band CB in the above description, it is also possible to bulge and deform a carcass band CB without the center bladder 21d, and in that case, such bulging and deforming can be conducted by attaching rubber seals for sealing an internal pressure onto cooperative outer peripheral surfaces of the bead lock portions 21b, respectively, and by supplying an internal pressure into a space enclosed by the bead lock portions 21b and the carcass band CB.

Thereafter, the applicable building drum 21 is successively moved through the workstations F3 to F8, and the following working operations are conducted.

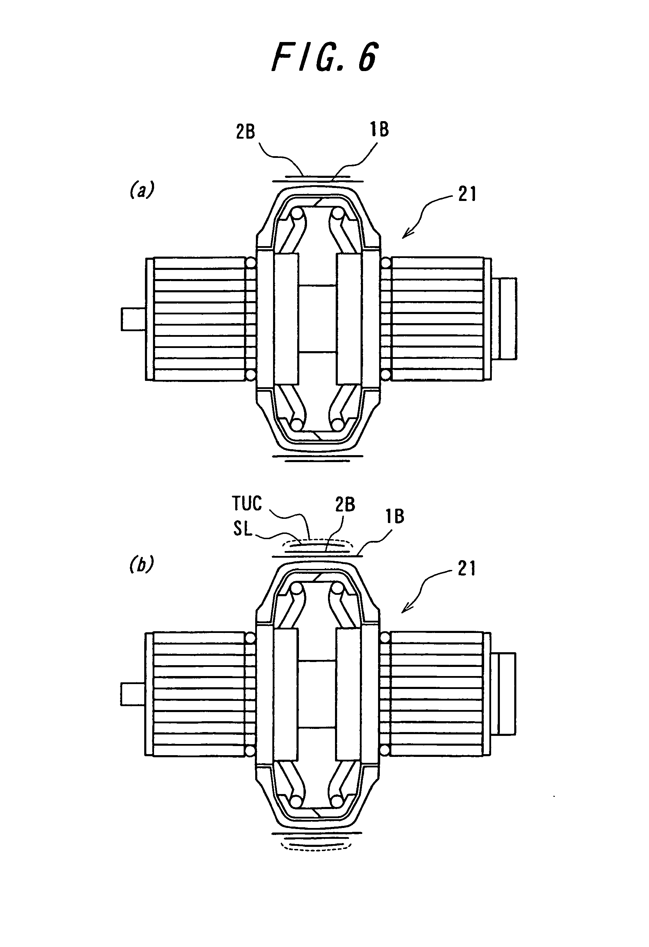

Firstly, at the workstation F3, there is used an inside layer belt member mounting apparatus 27 to mount an inside layer belt member 1B onto the radially expanded core bodies 21a as a base as shown in FIG. 5(b), and next at the workstation F4, there is used an outside layer belt member mounting apparatus 28 to mount an outside layer belt member 2B as shown in FIG. 6(a).

At the workstation F5, there are used a spiral layer member mounting apparatus 29 and a tread under cushion member mounting apparatus 30 to mount a spiral layer member SL and a tread under cushion member TUC at an outer periphery side of the spiral layer member SL, as shown in FIG. 6(b).

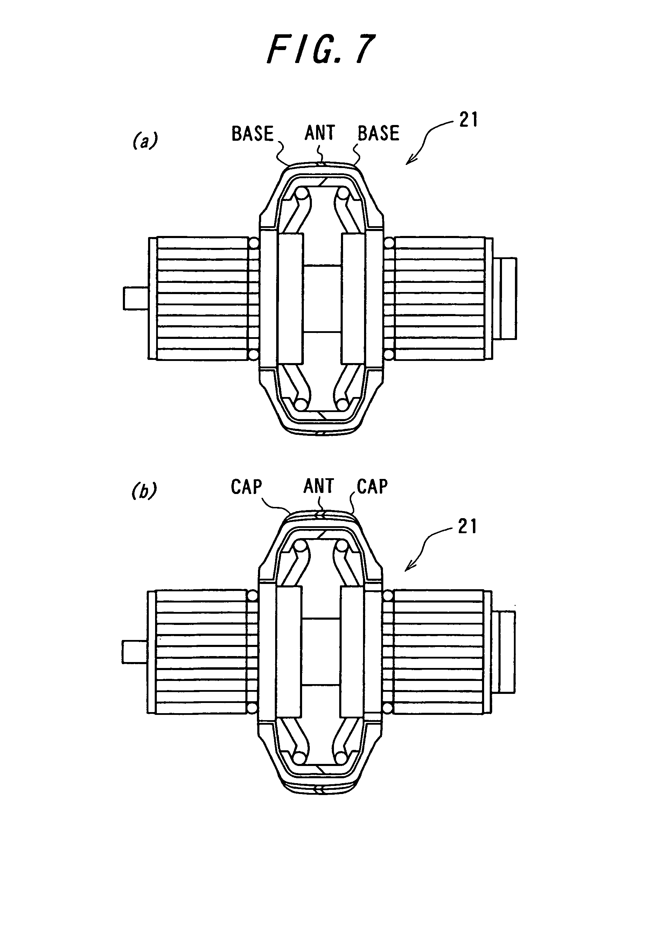

At the workstation F6, there are used a base tread member mounting apparatus 31 and an antenna member mounting apparatus 32 to mount base tread members BASE to be arranged at both sides in a tire axial direction, respectively, and an antenna member ATN high in electro conductivity and to be arranged at a center portion in the tire axial direction as shown in FIG. 7(a), and then there are used a cap tread member mounting apparatus 33 and the antenna member mounting apparatus 32 to mount cap tread members CAP to be arranged at both sides in the tire axial direction, respectively, and another antenna member ATN high in electro conductivity and to be arranged at a center in the tire axial direction.

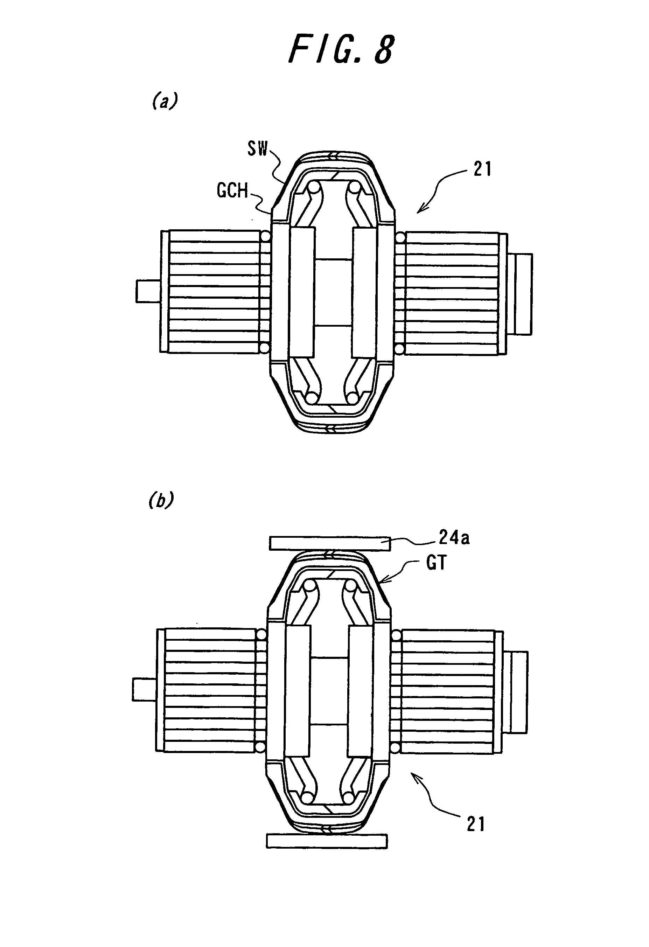

Further, at the workstation F8 as shown in FIG. 8(a), a sidewall member mounting apparatus 34 is used to mount sidewall members SW onto opposite side surfaces of the tire in the course of building, respectively, and then a rubber chafer member mounting apparatus 35 is used to mount rubber chafer members GCH to the sidewall members at radial insides, respectively.

As described above, each toroidal building drum 21 is provided with the associated bead lock portions 21b, shaping bladder 21d, and core bodies 21a to be scalable and displaced, and operations from toroidal expansion of the carcass band CB up to mounting of the belt members and tread members are conducted on the building drum 21 while the tire in the course of building is bead locked thereby, to enable a tire quality including uniformity to be remarkably improved as compared with a conventional building method in which a tire in the course of building is required to be moved among workstations by releasing the bead locking of the tire during such operations.

At the final workstation F9 thereafter, operations including attachment of a barcode are conducted, and then a finished green tire GT is detached from the toroidal building drum 21 and transferred to the green tire transferring carriage 24.

The green tire transferring carriage 24 is provided with an scalable grip ring 24a for gripping the green tire GT from a radial outside thereof, and upon transferring the green tire GT from the building drum 21 to the transferring carriage 24, the transferring carriage 24 having the grip ring 24a in a radially expanded state is moved to the workstation F9 at which the building drum 21 is kept stand-by. Then, the grip ring 24a is radially contracted to grip an outer periphery of the finished green tire GT as shown in FIG. 8(b), and thereafter the building drum 21 is radially contracted to allow the green tire transferring carriage 24 gripping the green tire GT to be withdrawn from the workstation F9.

Thereafter, the green tire GT is transferred from the green tire transferring carriage 24 to the green tire conveyor 25, and conveyed to the tire vulcanizing system 3.

Meanwhile, the applicable second building carriage 22 is further moved clockwise on the endless track 23, to move the associated building drum 21 to the workstation F1.

Although the above description has been conducted for a tire of a size to be formed by mounting thereto all tire components having been prepared at the tire building system 2, it is also possible to conduct required mounting for a tire of a size which rejects a part of the tire components, by merely skipping the corresponding operations.

Further, the tire components to be mounted by the building system 2 are not limited to the above, and it is possible to appropriately add or omit tire components correspondingly to a group of sizes to be dealt with by the building system 2.

Also, the arrangement including the tracks 14, 23 is not limited to the above and can be appropriately selected correspondingly to production conditions, spatial restriction, and the like, and, for example, although the workstations F1 through F8 in the embodiment of FIG. 2 are provided correspondingly to the mutually parallel straight portions constituting the track 23, these workstations may be provided correspondingly to only one of the straight portions, with an elongated layout in such a case.

Incidentally, although it has been impossible for conventional tire building systems to build green tires of different sizes in a predetermined tact time with mixing because there is required an unreasonably prolonged time for size changeover of respective tire components and complicated building drums, it is possible in the building system 2 that green tires of two different sizes selected from a group of predetermined sizes are continuously built in a predetermined tact time.

This point will be described hereinafter.

The first mounting method of tire components for enabling such a multi-size mixed building is to spirally wind a rubber ribbon of predetermined material to be continuously extruded from a nozzle having a predetermined cross-sectional shape, onto a cylindrical or toroidal building drum, so as to laminate the rubber ribbon into a predetermined cross-sectional shape to thereby conduct mounting of tire components. This method is called a "ribbon laminating method" herein as an expediency.

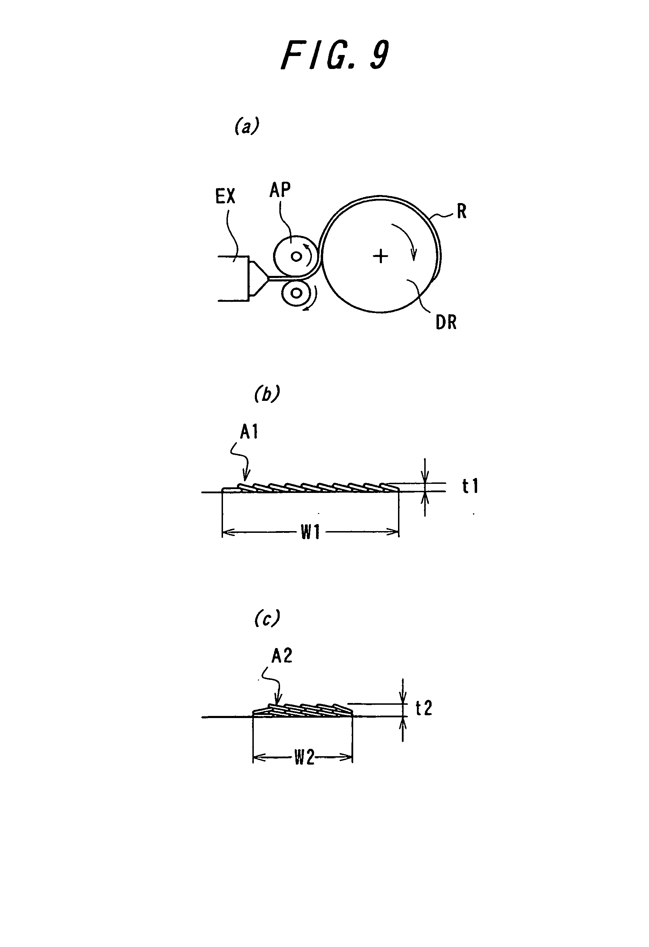

FIG. 9 is an explanatory view of this method in which the ribbon laminating method is to continuously extrude a rubber ribbon R from an extruder EX having a nozzle of a predetermined cross-sectional dimension and a predetermined shape, to grip the ribbon R by a ribbon adhering apparatus AP while rotating a rotor DR, and to spirally laminate the ribbon R around a circumference of the rotor DR while controlling the position and angle of the ribbon to thereby form a laminated body of a predetermined cross-sectional shape as schematically shown in a side view of FIG. 9(a), and as seen from the laminated body shown in widthwise cross-sectional views of FIG. 9(b) and FIG. 9(c), this method allows the ribbon R of the same cross-sectional dimension and shape to be used to form a wide and thin laminated body A1 having a width W1 and a thickness t1 as well as a narrow and thick laminated body A2 having a width W2 and a thickness t2, thereby enabling mounting of tire components corresponding to different sizes without requiring a period of time for changeover, by previously programming the behaviors of the ribbon adhering apparatus AP corresponding to a group of sizes, respectively, and by selecting a program to be executed correspondingly to an applicable size.

The second mounting method of tire components for enabling the multi-size mixed building is to cut a continuous sheet having a predetermined width and made of a predetermined material into strips of predetermined lengths for sizes, respectively, and to join the strips together by a predetermined number corresponding to each size such that cut surfaces of the cut strips are lined up in a circumferential direction of a building drum; and this is called a "constant width strip method" herein as an expediency.

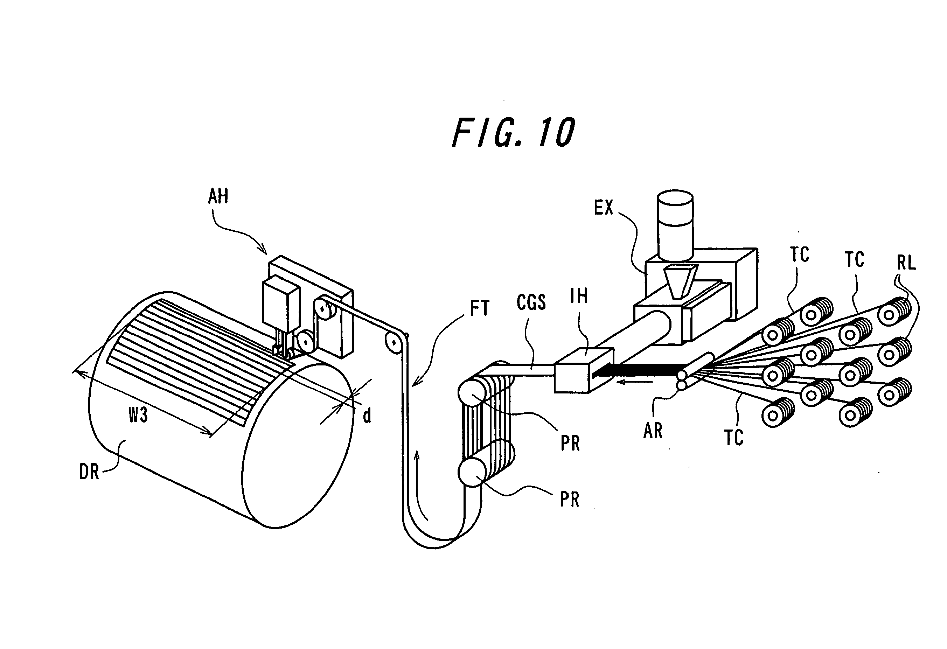

FIG. 10 is an explanatory view of this method taking a corded rubber member as an example, and this constant width strip method comprises the steps of: drawing surface treated cords TC from a plurality of reels RL, respectively, and pulling/aligning them through pulling/aligning rollers AR; separately extruding a coating rubber from an extruder EX; passing the cords TC through an insulation head IH to coat the rubber onto them to thereby form a corded rubber strip CGS having a predetermined width; passing the corded rubber strip CGS over pull rollers PR and through a festoon FT to thereby guide it to an adhering head AH; disposing the strip CGS on a rotor DR parallel or at an inclined angle to an axis of the rotor DR by the adhering head AH, and thereafter cutting the strip CGS at a cutting length corresponding to a predetermined width W3 on the rotor DR; then rotating the rotor DR by an angle corresponding to a circumferential length of a dimension obtained by subtracting a joining margin from a rotor-wise circumferential width of the strip CGS; and repeating the operations of the adhering head AH by a number of times to be determined correspondingly to the applicable size; to thereby mount the strip CGS for a full circumference of a tire.

According to this method, it is possible to deal with all sizes of tire components by simply varying the cutting length W3 and the number of strips to be adhered in a manner to set, the dimension obtained by subtracting the joining margin from the width d of the strip, to be a common divisor of circumferential lengths corresponding to all the above group of target sizes of tire components, thereby enabling mounting of tire components corresponding to different sizes without requiring a period of time for changeover, by previously programming a movement stroke and the number of movements of the adhering head AH correspondingly to a group of sizes, respectively, and by selecting a program to be executed correspondingly to an applicable size.

In the building system 2, it is possible to conduct mounting by the ribbon laminating method, for the squeegee member SQ, tread under cushion member TUC, base tread member BASE, cap tread member CAP, antenna member ATN, sidewall member SW, and rubber chafer member GCH, among the previously described tire components. Further, provided at the mounting apparatus corresponding to these components are extruders 17a, 30a, 31a, 33a, 32a, 34a, 35a, respectively, in an order of these components.

It is further possible to mount the inner liner member IL, inside and outside layer carcass members P, and inside and outside layer belt members, 1B, 2B, by the constant width strip method. As a strip to be used for the inner liner member IL upon mounting the same, a simple rubber sheet of a constant width is extruded from an extruder 15a instead of the corded rubber strip in FIG. 10, this rubber sheet is cut to lengths corresponding to a target tire size on a conveyor 15b, the thus cut strips are successively joined to each other on a transference drum 15c to form a sheet corresponding to one tire, thereafter the transference drum is moved to be circumscribed with the cylindrical building drum 11, and then the drums 11, 15c are synchronously rotated to transfer the sheet onto the building drum 11.

Further, in mounting a carcass member P, a plurality of cords drawn from a reel stand 18a are pulled and aligned, then a rubber is extruded from an extruder 18b to coat the rubber onto the cords, the corded rubber strip CGS formed at this stage is adhered onto a transference drum 18c, thereafter the strip is cut into predetermined lengths in accordance with a target tire size, the cut strips are joined to each other by the predetermined number to prepare a carcass member sheet corresponding to one tire, then the transference drum 18c is moved to be circumscribed with the cylindrical building drum 11, and both drums 11, 18 are synchronously rotated to transfer the sheet onto the building drum 11.

In case of a tire size having a structure where two layers of carcass members P are mounted, both layers of carcass members for one tire are prepared by circumferentially juxtaposing the carcass members on the transference drum 18c, and thereafter the transference drum 18c is abutted onto and separated from the building drum 11 consonantly with mount timings of the respective members.

Meanwhile, concerning the belt member 1B at the inner layer side, a plurality of cords drawn from a reel stand 27a are pulled and aligned, thereafter a rubber is extruded from an extruder 27b to coat the rubber onto the cords, the corded rubber strip CGS formed at this stage is directly adhered onto the applicable building drum 21, and in this case, since the corded rubber strip CGS is required to be adhered such that the cords are inclined relative to a tire axis at a predetermined angle, the building drum 21 is rotated and the adhering apparatus is moved in an axial direction of the building drum 21 synchronously with the building drum 21 to thereby adhere the strip thereto. Further, also the belt member 2B at an outer layer side is mounted in the same manner.

Members other than the above-mentioned members to be mounted by the ribbon laminating method or constant width strip method are mounted as follows. Canvas chafer members CCH are each mounted by drawing out a web out of a roll of material having a predetermined width and formed by a separate process, and by cutting it into a piece of length corresponding to a required circumferential length to thereby wrap the cut piece onto the building drum 11, in which the axial position for wrapping the cut piece is configured to be variable. Further, widths of canvas chafer members CCH are made common to as many as sizes, to an extent where problems are not caused in tire performance.

Concerning the preset beads PB, they are prepared on the bead stock 19b for applicable sizes, respectively, and the bead handling robot 19a is to pick up due preset beads PB correspondingly to a required size, thereby dealing with the multi-size.

Re spiral layer member SL, there is set a roll of corded rubber having a narrow width, and this can be mounted by drawing it out from the roll and spirally winding it around the applicable building drum 21, in which the number of windings is changed for each size to enable different sizes to be dealt with.

In turn, the building drum 11 is configured to be capable of dealing with tire components of different axial widths and different diameters, while each toroidal building drum 21 is also configured to be capable of arbitrarily changing a space between the bead lock portions 21b and that between the core bodies 21a so as to deal with tire components of different axial widths.

Note that tires having different rim diameters are dealt with by exchanging toroidal building drums 21, and the second building unit 6 is configured to be capable of exchanging drums within a predetermined tact time.

Namely, in the second building unit 6, rail portions of the endless track 23 corresponding to the workstation F1 are configured to be movable to a drum changeover station D arranged outside the track, and the drum changeover station D is configured to be capable of turning the moved rail portions by a predetermined angle; and in case of conducting size changeover of an applicable building drum 21, an applicable building carriage 22 having thereon the building drum 21 to be ejected is fixed to the rails at the workstation F1, then the rail portions carrying thereon the building carriage 22 are moved to the drum changeover station D, this station is turned to couple the moved rails to rails at an empty carriage yard X1 to thereby eject the building drum 21 together with the building carriage 22 to the empty carriage yard X1, thereafter the drum changeover station D is further turned and the moved rail portions are coupled to rails of a carriage yard X2, a building carriage 22 having thereon a new size building drum 21 kept stand-by at the carriage yard X2 is moved into the drum changeover station D, and then the station is turned and they are returned to the workstation F1 together with the rail portions, thereby enabling exchange of building drums 21 in a short time.

While another tire building system according to the present invention is applicable to at least one of the first and second building units of the above-mentioned tire building system under a condition that the guide track for building carriages is an endless track, there will be described an example where the noted tire building system is applied to the second building unit 6 herein.

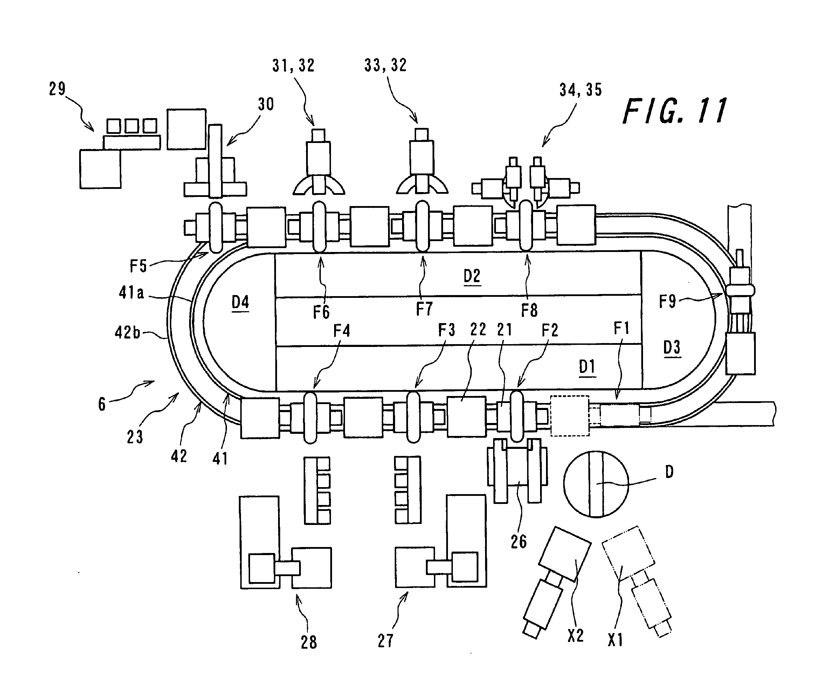

As shown in an enlarged essential-part cross-sectional view of FIG. 11, the tire building system applied to the second building unit 6 comprises: toroidal building drums 21; building carriages 22 cantilever supporting the toroidal building drums 21 and rotationally driving them, respectively; and a substantially oval track 23 for enabling endless circulative traveling of the building carriages 22; as well as workstations F1 through F8 which are eight in number in this figure, and disposed along the track 23 to mount pertinent tire components onto the toroidal building drums 21, respectively.

As shown in this figure, the eight building carriages 22 arranged on the track 23 are moved among the workstations by driving apparatus disposed inside the endless track 23, and are stopped at the workstations F1 through F8 and positioned with higher accuracies, respectively.

While the building carriages 22 can be made self-propelled of course; in case of disposing the driving apparatus inside the track 23, there are provided a pair of driving apparatus D1, D2 configured to manage traveling movements of the carriages 22 along the straight portions and a pair of driving apparatus D3, D4 configured to manage traveling movements along arcuate portions so that a human operator is allowed to monitor a building situation at the workstations from inside of the endless rails, and multiple carriages are simultaneously traveled by the driving apparatus D1, D2 for the straight portions, to enable a reduced number of parts for driving to attain a reduced equipment cost and an enhanced reliability of synchronized driving, and the like.

Further, although it is of course possible here to position and retain building carriages 22, after they are stopped, at positions accurately corresponding to the workstations F1 through F8 by the driving apparatus themselves, it is of course possible to conduct the positioning and retaining by separately provided positioning and retaining pins or other retaining means in a case that a reduced tact time is contemplated by making each driving apparatus to be kept stand-by at a predetermined position for the next travel driving of each building carriage 22.

Manufacturing of green tires by such a building system is the same as that described above with respect to the second building unit 6, and thus the explanation thereof shall be omitted here.

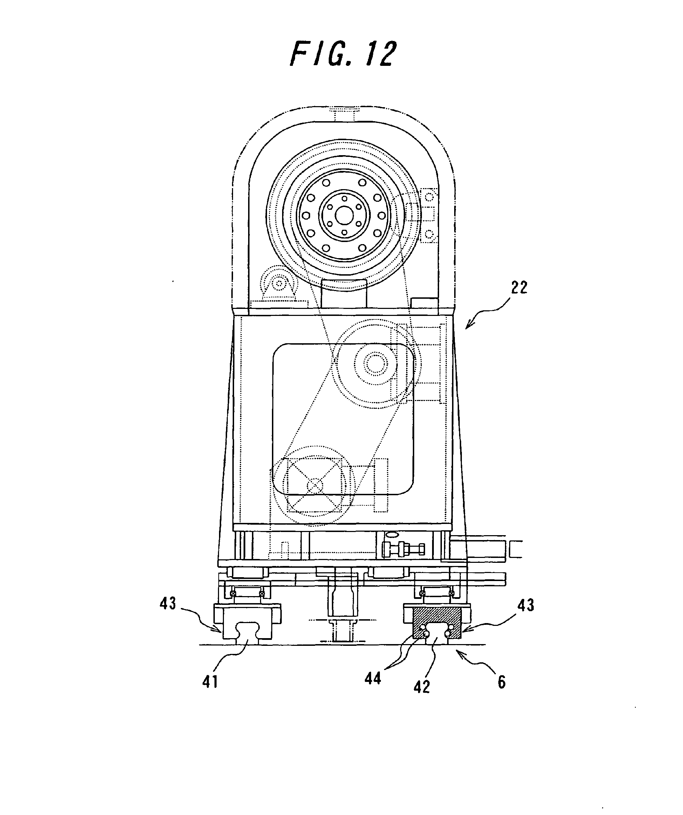

In such a tire building system, carriage guiding means for each building carriage 22 for guiding it on a predetermined path, which is the endless oval track 23 in the figure, is configured with: two inner and outer endless rails 41, 42 mutually parallel laid within a horizontal plane, for example; and wheels 43 such as shown in a partially cross-sectional front view of the carriage in FIG. 12, the wheels shown in this figure being disposed on the associated building carriage 22, so as to tightly engage with the endless rails 41, 42, respectively, to thereby restrict a carriage position with a higher precision in a direction orthogonal to an extending direction of the endless rails 41, 42.

It is preferable here, as shown in FIG. 11, that the endless rails 41, 42 are each configured with mutually parallel and oppositely positioned straight portions equal in length at two locations and arcuate portions at two locations for smoothly connecting opposite ends of the straight portions with each other, respectively.

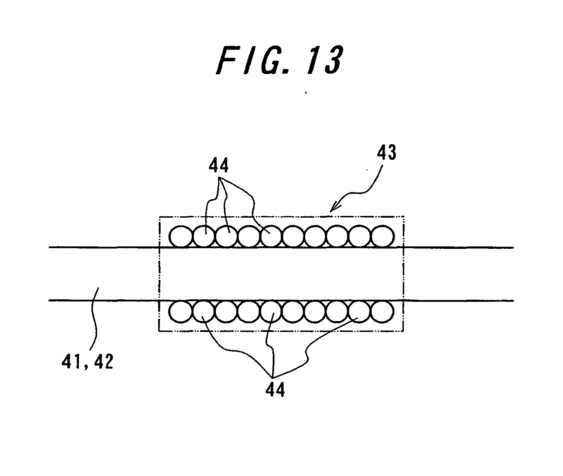

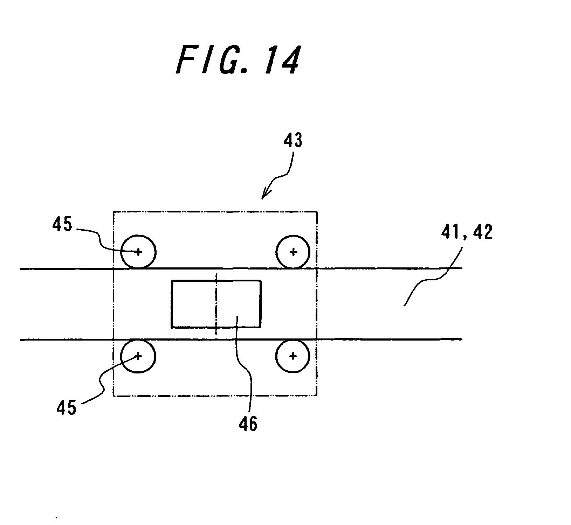

Further, the wheels 43 to be engaged with such endless rails 41, 42 in a tight manner, i.e., without any play, are each provided with, a plurality of balls 44 to be rolled on opposite side surfaces of the endless rail 41, 42 as shown in a schematic plan view of FIG. 13, or a plurality of rollers 45 to be rolled on opposite side surfaces of the endless rail 41, 42 and a roller 46 to be rolled on the endless rail 41, 42 as schematically shown in FIG. 14, to thereby sufficiently enhance the position restricting function of each wheel 43. In the former case, each wheel 43 is preferably configured with a ball circulation type slide table such as a linear motion guide.

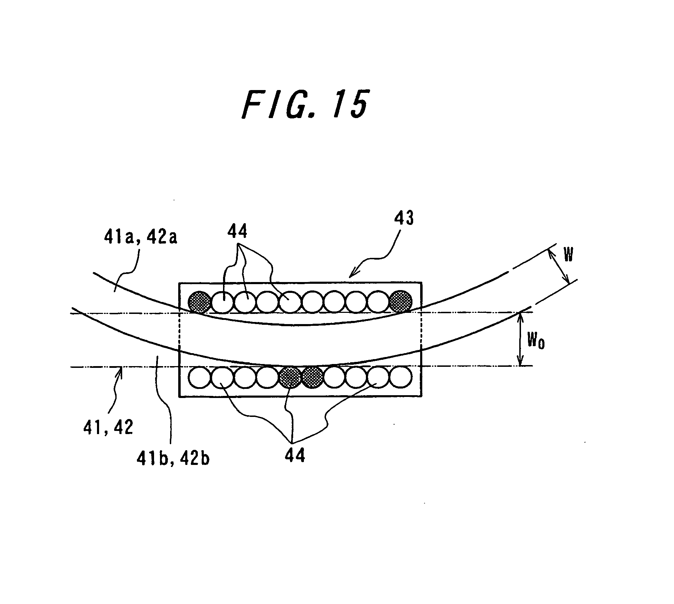

Moreover, to cause the wheels 43 to sufficiently smoothly pass along the straight portions as well as even the arcuate portions constituting the endless rails 41, 42 while exhibiting the required carriage position restricting functions of the wheels, respectively, the straight portions and the arcuate portions are smoothly continued to each other, respectively, and as exemplified in FIG. 15, an arcuate portion 41a, 42a of the endless rail 41, 42 has a rail width W narrower than a rail width $W_0$ of the straight portion 41b, 42b, by an amount corresponding to a radius of curvature of the arcuate portion 41a, 42a.

According to such a constitution as exemplified by the wheel 43 comprising a slide table in FIG. 15, the plurality of balls 44 are all abutted on the side surfaces of the endless rail 41, 42 at the straight portion 41b, 42b to thereby guide the traveling of the applicable building carriage 22 and to thereby enable the displacement of the building carriage 22 in a direction intersecting an extending direction of the endless rail 41, 42 to be sufficiently restrained, while two balls 44 separated most in a cross direction of the applicable wheel 43 in the shown plan view are abutted on the rail inside surface, and one or two balls, two in this figure, located at a position in between the above two balls 44 is/are abutted on the rail outside surface at the arcuate portion 41a, 42a to thereby similarly, smoothly and assuredly enable guiding of traveling of the carriage 22 and the positional restriction, so that the wheel 43 can cooperate with the endless rail 41, 42 to thereby position the associated carriage 22 with a higher precision in a direction intersecting the extending direction of the rail 41, 42 whether the rolled locations of the wheel 43 are at the arcuate portion 41a, 42a or at the straight portion 41b, 42b.

Note that, to sufficiently exhibit such a function of each wheel, it is required that a rail width W for a smaller radius of curvature of an arcuate portion 41a, 42a is made narrower than a rail width $W_0$ of a straight portion 41b, 42b.

The relationship between these rail widths can be represented as follows:

$$r^2 = (r - d)^2 + t^2$$

$$r - d = \sqrt{r^2 - t^2}$$

$$d = r - \sqrt{r^2 - t^2}$$

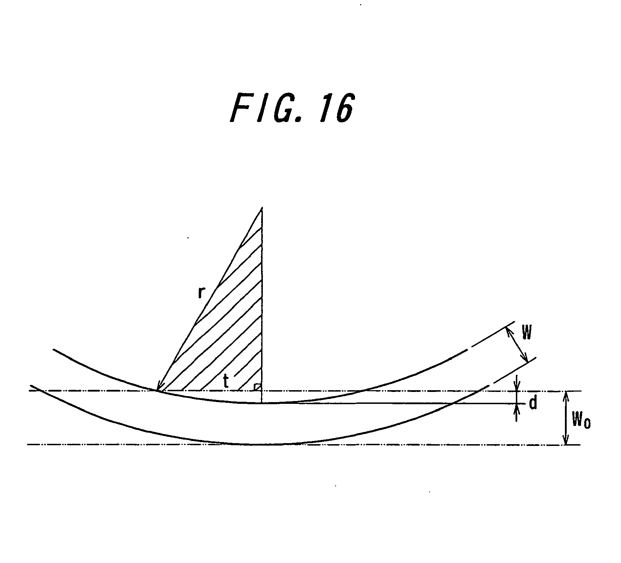

wherein "r" represents a radius of curvature at an inner surface side of an arcuate portion,
"d" represents a difference ($W_0$-W) between rail widths, and
"t" represents 1/2 of a distance between two balls which contact with an inside of the arcuate portion; as shown in FIG. 16 which is a schematic view of FIG. 15, for example.

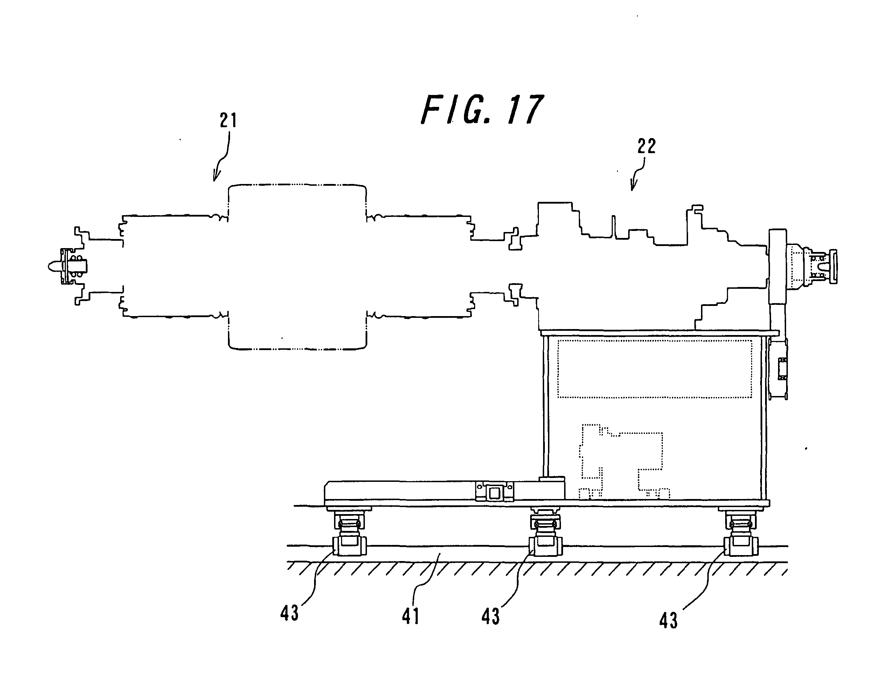

Incidentally, in order to allow a carriage as a whole to be sufficiently smoothly passed to the arcuate portions 41a, 41b when the above-mentioned wheels 43 constituting essential parts of the carriage guiding means are attached iu the carriage as shown in FIG. 17 such that the endless rails 41, 42 are each engaged with three wheels, it is required to: compensate for a discrepancy between the traveling directions of the carriage 22 and the rolling direction of the wheels 43; and allow a predetermined increase of distance between paired wheels 43 attached to the carriage with a predetermined space in a carriage width direction, at the arcuate portions 41a, 42a.

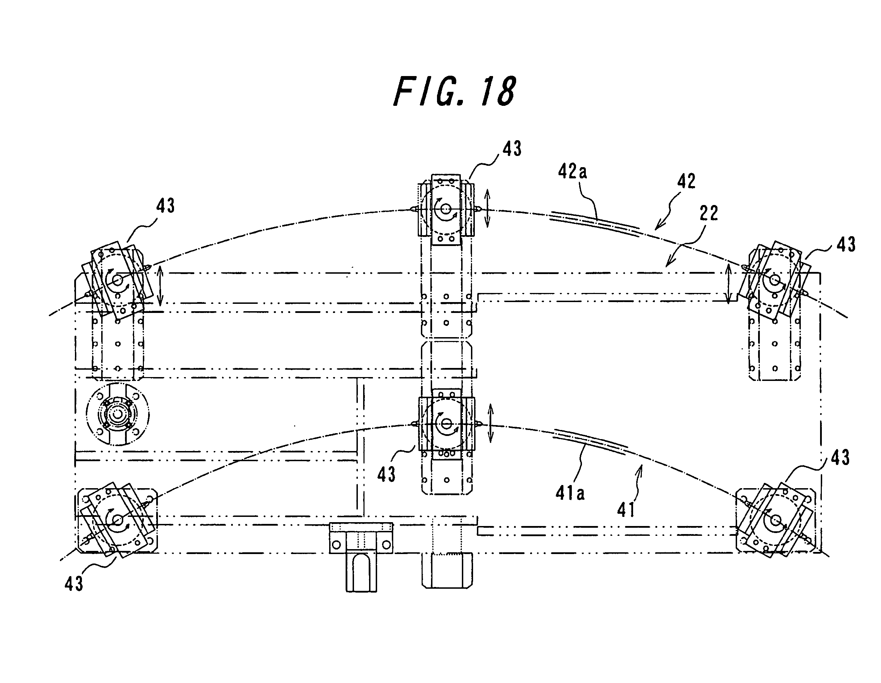

Thus, as seen from a schematic plan view of FIG. 18 showing a relationship among the wheels 43, arcuate portions 41a, 42a of the endless rails 41, 42, and the carriage 22: six wheels 43 attached to the carriage are all swingable such as together with center shafts around vertical central axes, to thereby enable compensation for angle differences between the traveling direction of the carriage 22 and the rolling directions of the wheels 43; and simultaneously therewith, those of the paired wheels 43 positioned at front and rear ends of the carriage 22 which are engaged with one of the inner and outer endless rails 41, 42, here two wheels 43 engaged with the outside endless rail 42, as well as the paired wheels 43 positioned at an intermediate portion of the carriage 22, are attached to the building carriage 22 such that the vertical central axes of these wheels 43 are displaceable in directions orthogonal to the traveling direction of the carriage 22, i.e., orthogonal to the cross direction of the carriage 22, thereby sufficiently allowing changes of distances between paired wheels 43, respectively.

Since two wheels 43 located at the front and rear ends of the carriage 22, respectively, and engaged with the inner rail 41 are still to conduct only swinging displacements even when the wheels are attached in the above manner, these two wheels 43 are capable of sufficiently and properly exhibiting the carriage position restricting function in the direction orthogonal to the rail extending direction.

Note that when totally four wheels 43 are provided on a building carriage 22, it is possible to adopt a wheel attachment structure achieved by omitting the centrally positioned and paired wheels 43 from the shown structure, thereby also enabling the same function as the above to be exhibited.

The constitution of each wheel 43 and the attachment structures of the wheels 43 are achieved in the above manner to thereby allow a building carriage 22 to travel sufficiently smoothly with the carriage position being restricted with respect to a rail width direction with a higher precision on the endless rails 41, 42 whether along the straight portions or along the arcuate portions, thereby achieving an intended stopping position accuracy of the carriage 22 to allow the carriage 22, thus a building drum 21 supported thereon, to be positioned with a higher precision at any of the workstations F1 through F8 and F9, and as a result, the working operations at the workstations F1 through F9, particularly the mounting operations of tire components at workstations F1 through F8 can be conducted with a higher precision, thereby enabling realization of a product tire of excellent quality.

For further improved working operation accuracies at the straight portions of the track 23, particularly at the workstations F2 through F4 and workstations F6 through F8, it is preferable that each building carriage 22 is provided with a bearing or another engaging/supporting means for a free end of a building drum 21 cantilever supported by an adjacent building carriage 22, thereby allowing a central axis of the building drum 21 to be maintained in a horizontal orientation with a higher precision.

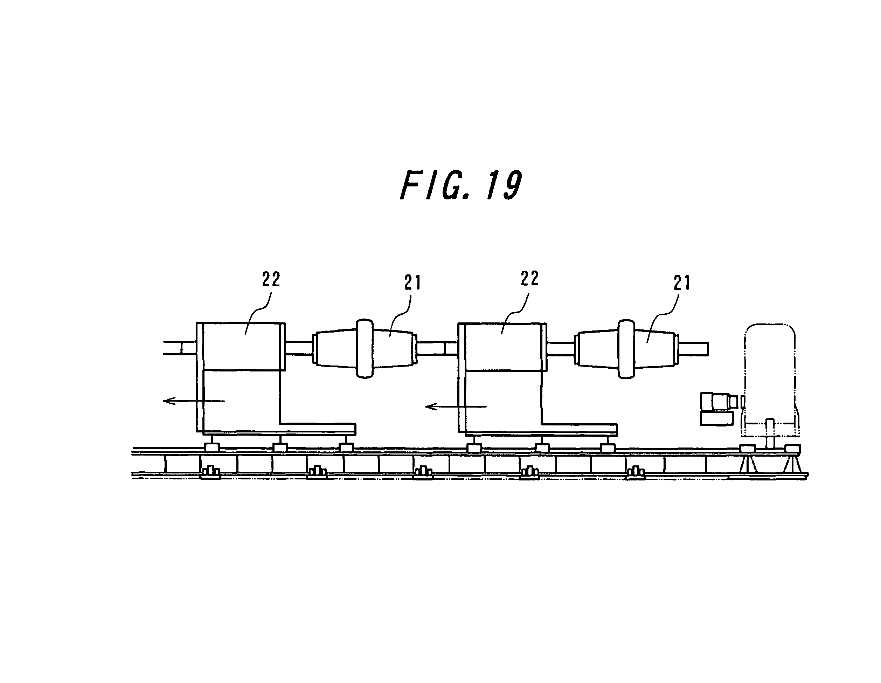

FIG. 19 shows a state where the free end of the building drum 21 cantilever supported by the preceding building carriage 22 is supported by the engaging/supporting means provided at the front end of the succeeding building carriage 22, and such an engaged/supported state can be maintained over a predetermined period of time by causing both building carriages 22 to be synchronously traveled.

In turn, the engagement can be released as required, by causing the preceding building carriage 22 to travel with an earlier timing relative to the succeeding building carriage 22.

Although the other tire building system according to the present invention has been described in the above based on the drawings, this system can also be applied to the first building unit shown in FIG. 2. Further, it is possible to suitably select the driving configuration of the building carriages, the positioning configuration thereof, and the like as required, and this is also true for the mutual travel driving configuration, structure and the like of the building carriages to be arranged on the endless track in plural.

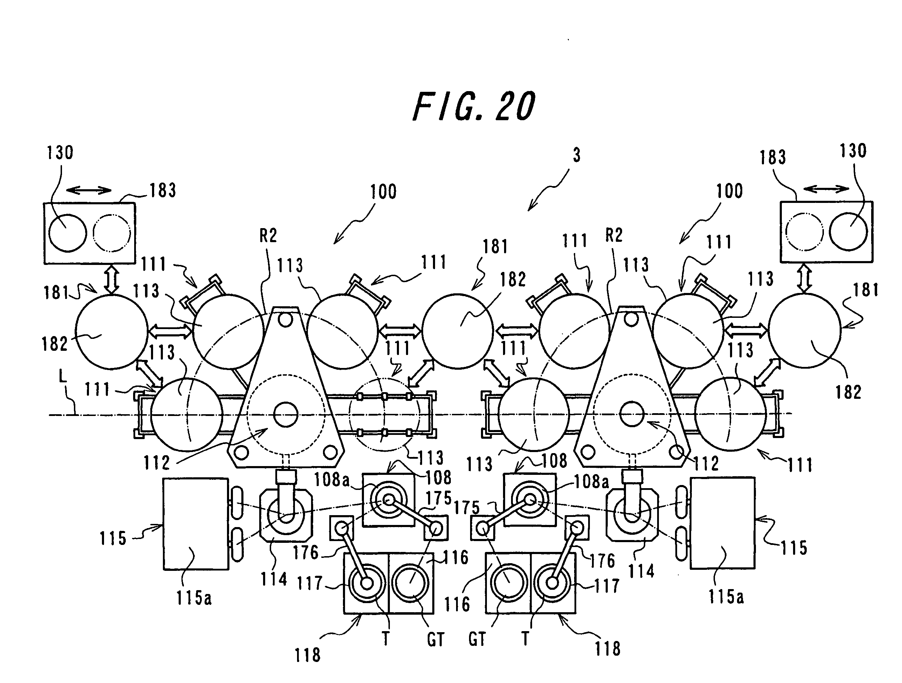

There will be explained hereinafter a tire vulcanizing system constituting the tire manufacturing system according to the present invention. FIG. 20 is a schematic plan view showing the tire vulcanizing system 3, in a situation where two sets of the same vulcanizing systems 100 are disposed in a mutually neighbored manner. In the following description, a term "unvulcanized tire" or "unvulcanization tire" has the same meaning as a green tire.

In each vulcanizing system 100, there are arranged one set of mold opening/closing station 112, and four sets of vulcanizing stations 111 on an arc R2 about the center of the associated mold opening/ closing station 112 and at one side of a straight line L connecting between the centers of the mold opening/closing stations 112 of two vulcanizing systems 100. There is provided a mold relaying station 181 outside the arc R2 and at a substantially equidistant position from at least two vulcanizing stations 111, while providing a mold taking-in/out apparatus 182 preferably of a turntable structure for taking a used vulcanizing mold out of the neighbored vulcanizing station 111 to the mold relaying station 181 and accommodating a next-use vulcanizing mold into the vulcanizing station 111.

Each vulcanizing system 100 is provided with four sets of mobile vulcanizing units 113 to be reciprocated and displaced between four sets of vulcanizing stations 111 and the associated mold opening/ closing station 112, respectively. FIG. 20 shows a state where one of these four sets of mobile vulcanizing units 113 corresponding to the vulcanizing station 111 which is just right of the left side vulcanizing system 100, is displaced toward the mold opening/closing station side.

At a side opposite to an area where the vulcanizing stations 111 are arranged with respect to the straight line L connecting between the mold opening/closing stations 112, there is provided a mold-opening/closing-station-aimed tire transferring apparatus 114 for taking a vulcanized tire out of the mold opening/closing station 112 and for delivering an unvulcanization tire into the mold opening/ closing station 112. In the mold opening/ closing station 112, the tire is housed within a mold in a posture where the central axis of the tire is vertical, and the tire transferring apparatus 114 takes the tire in this posture into and out of the mold opening/closing station 112.

Provided within an operation area of each tire transferring apparatus 114 are: a bladder attaching/detaching station 108 including a bladder attaching/detaching apparatus 108a for attaching a bladder B onto an unvulcanized tire GT and for detaching the bladder B from a vulcanized tire T; and an incoming and outgoing station 118; in which the incoming and outgoing station 118 juxtaposingly includes: an unvulcanized tire placing stand 116 for temporarily storing an unvulcanized tire GT before mounting the bladder B thereto and for transferring it to the tire transferring apparatus 114; and a vulcanized tire placing stand 117 for receiving a vulcanized tire T from the tire transferring apparatus 114 and temporarily storing the tire; as well as at least one, two in this figure, manipulators 175, 176 between these stations 108, 118, for transferring tires GT, T between the stations 108, 118.

Note, it is possible in this figure that the stands 116, 117 mutually neighbored in the right-and-left direction in the same plane are modified to be neighbored in the up-and-down direction or in the cross direction, and in either case, it is desirable to take an unvulcanized tire GT onto the associated stand 116 and to take a vulcanized tire T out of the stand 117 by utilizing a belt conveyor or other taking out means (not shown).

Further preferably, post-vulcanization treatment stations 115 are provided within the working areas of the tire transferring apparatuses 114 additionally to the above, respectively, and each station 115 is provided with a post cure inflator 115a for enabling application of a PCI treatment to a bladder-containing vulcanized tire T. Each post cure inflator 115a is capable of supporting four tires at four locations, respectively, so as to enable simultaneous application of the PCI treatment to four tires, and is configured to support the tires in postures for horizontally keeping the central axes, respectively. Further, on the bladder attaching/detaching station 108, unvulcanized tire placing stand 116, and vulcanized tire placing stand 117, tires are emplaced in postures where the central axes thereof are made vertical, respectively.

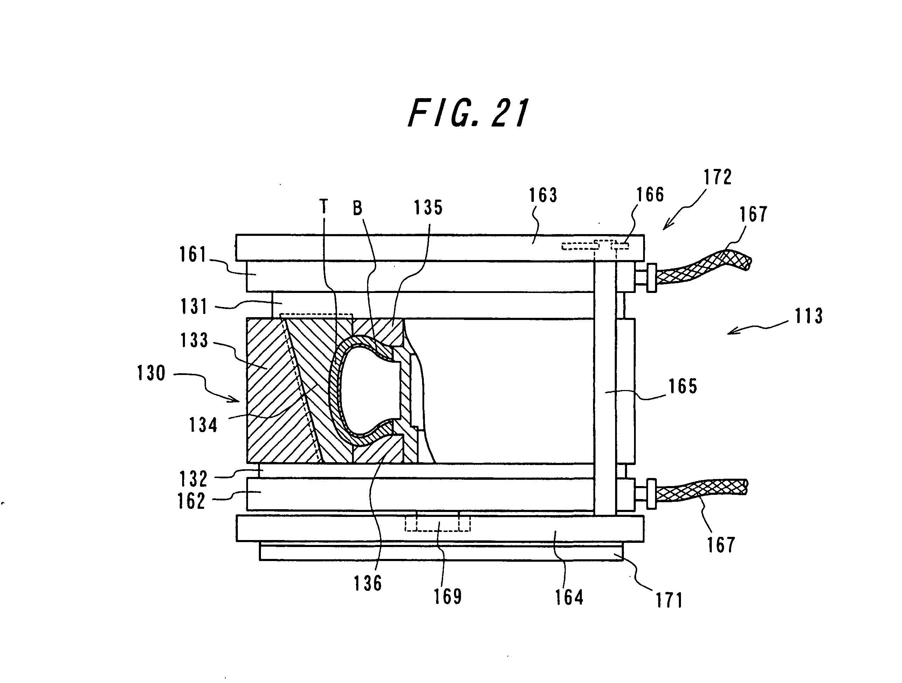

There will be described the vulcanizing stations 111 and mold opening/closing station 112 constituting the associated vulcanizing system 100, and the mobile vulcanizing units 113 to be reciprocated and displaced between the stations. FIG. 21 is a side view showing the mobile vulcanizing unit 113. This mobile vulcanizing unit 113 is provided with a vulcanizing mold 130 having a cavity for housing a tire T therein and a bladder B defining an inner surface shape of the tire T.

The vulcanizing mold 130 comprises an upper mold-piece 131, a lower mold-piece 132 and a container 133, which combine to define a cavity for housing a tire T therein. Further, these elements are separated from one another in the up-and-down direction to thereby enable the tire to be taken into and out of the cavity. Moreover, the lower mold-piece 132 comprises a lower side mold-piece 136 corresponding to one side portion of a tire, and the upper mold-piece 131 comprises an upper side mold-piece 135 corresponding to the other side portion of the tire and a plurality of segmented mold-pieces 134 which are movable in the radial direction and are circumferentially and mutually combined to define an annular shape so as to form an outer surface shape of a tread portion of the tire.

Further, the mobile vulcanizing unit 113 is provided with an upper platen 161 and a lower platen 162 which abut on opposite ends of the vulcanizing mold 130, respectively, and constitute heating platen portions, and these platens 161, 162 are connected with heating-medium supplying hoses 167.

In this way, there is supplied heating medium such as steam into heating medium jackets provided in the platens 161, 162 to thereby heat them, respectively, and this heat is transmitted to the vulcanizing mold 130 abutting on the platens, thereby vulcanizing the tire.

Further, each mobile vulcanizing unit 113 is provided with: an upper end plate 163 and a lower end plate 164 for integrally clamping the vulcanizing mold 130 and the platens 161, 162 abutted on the both end surfaces of the mold 130, respectively; a plurality of tie-rods 165 for coupling these end plates 163, 164 to each other; and a hydraulic jack 169 attached to the lower end plate 164 so as to urge the vulcanizing mold 130 toward the upper end plate 163 thereby clamping the vulcanizing mold 130. These end plates 163, 164, tie-rods 165 and hydraulic jack 169 cooperate to constitute mold-locking means for integrally clamping the vulcanizing mold 130 and upper and lower platens 161, 162.

Moreover, lower tip ends of the tie-rods 165 are fixed to the lower end plate 164 and upper tip ends of the tie-rods 165 are engaged with the upper end plate 163 via tie-plate 166, and the tie-plate 166 is constituted such that the tie-plate 166 can be turned and displaced around the axis of the vulcanizing mold so as to bring about engagement of the tie-rods 165 with the upper end plate 163 and to release this engagement.

Here, the upper mold-piece 131, upper platen 161, upper end plate 163 and tie-plate 166 constitute a rising/lowering unit portion 172 to be integrally moved when the upper end plate 163 is lifted up.

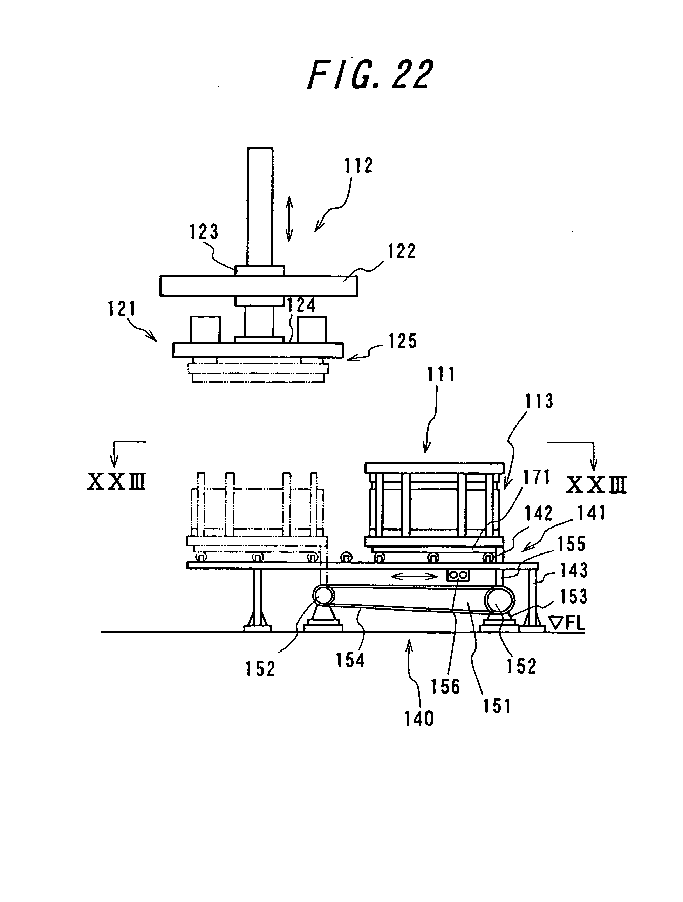

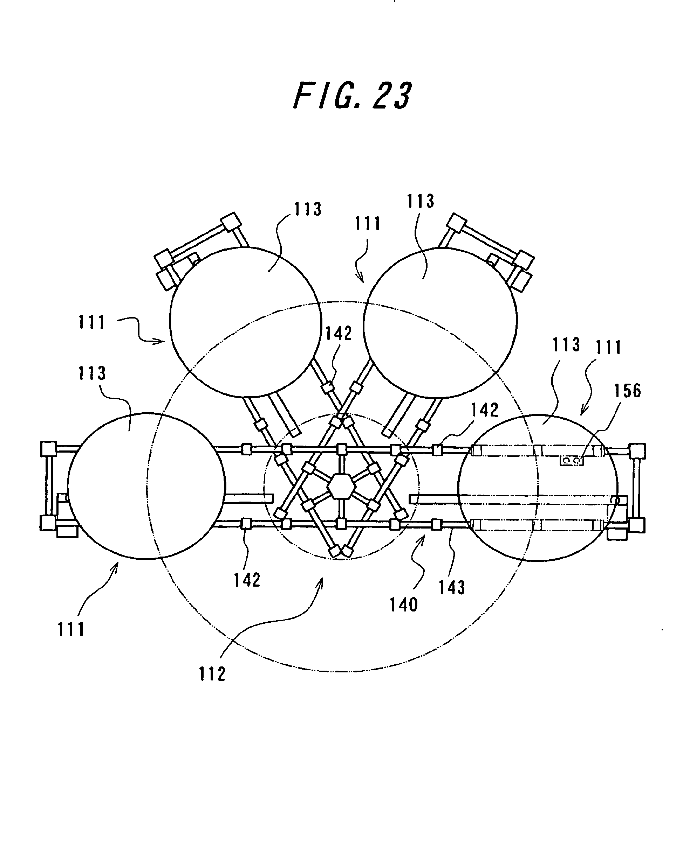

There will be explained hereinafter each vulcanizing station 111 and each mold opening/closing station 112. FIG. 22 is a front view showing one set of mold opening/closing station 112 and one set of vulcanizing station 111 provided oppositely thereto in each vulcanizing system 100 of FIG. 20, and FIG. 23 is a plan view in an XXIII-XXIII arrow direction of FIG. 22, in a manner to show all four sets of vulcanizing stations 111 arranged around the mold opening/ closing station 112.

Each vulcanizing station 111 is provided with a vulcanizing unit reciprocating driving apparatus 140, which includes a heating-medium supplying port 156 for supplying a heating medium and which reciprocates and displaces the associated mobile vulcanizing unit 113 between the vulcanizing station 111 itself and the associated mold opening/closing station 112.

This vulcanizing unit reciprocating driving apparatus 140 is constituted of a vulcanizing unit driving part 151 and a vulcanizing unit supporting/guiding part 141, and the vulcanizing unit driving part 151 is provided with a driving bar 155 fixed to one link of a link chain 154 spanned between two sprockets 152 and driven by a motor 153. The tip end of the driving bar 155 can be detachably coupled to a rearmost portion of the mobile vulcanizing unit 113, i.e., to a portion positioned opposite to the mold opening/closing station 112 by coupling means (not shown), and the mobile vulcanizing unit 113 can be reciprocated and displaced by reciprocating and displacing the link chain 154 by driving the motor 153.

The vulcanizing unit supporting/guiding part 141 comprises a plurality of rollers 142 and a roller stand 143 for supporting them, and these rollers 142 are arranged in two rows between the associated vulcanizing station 111 and mold opening/closing station 112 and parallel to a straight line connecting these stations. Meanwhile, the mobile vulcanizing unit 113 has, attached to its lower surface, two guide rails 171 parallel to the traveling direction, and these guide rails 171 are moved on and along the associated rows of rollers 142, thereby enabling the mobile vulcanizing unit 113 to be reciprocated and displaced relative to the mold opening/closing station 112.

As described above, the vulcanizing unit supporting/guiding part 141 of the vulcanizing unit reciprocating driving apparatus 140 is constituted of rollers 142 having short axes and laid over the moving region of the mobile vulcanizing unit 113, thereby enabling realization of the vulcanizing system 100 which is extremely simple with a reduced cost as shown in FIG. 20.

Moreover, as shown in FIG. 23, the vulcanizing unit supporting/guiding parts 141 and the mobile vulcanizing units 113 can be provided without interference between vulcanizing unit supporting/ guiding parts 141 and between the vulcanizing unit supporting/guiding part 141 and other mobile vulcanizing unit 113, even at the mold opening/closing station 112 and in the vicinity thereof where the vulcanizing unit reciprocating driving apparatuses 140 are crossed each other.

The mobile vulcanizing unit 113 can be moved in a state where the heating-medium supplying hoses 167 for supplying the heating medium from the heating-medium supplying port 156 are kept connected to the upper and lower platens 161, 162 of the mobile vulcanizing unit 113, thereby enabling a continued vulcanization even during movement of the mobile vulcanizing unit 113, so that this moving time is utilized as a part of vulcanizing time to the utmost, to thereby enable a correspondingly shortened cycle time, a reduced equipment cost, and a reduced risk of heating medium leakage from the connecting portions.

As shown in FIG. 22, the mold opening/closing station 112 is provided at its center with a mold opening/ closing apparatus 121 for rising and lowering the rising/ lowering unit portion 172 of the mobile vulcanizing unit 113 having been moved to the station 112. This mold opening/closing apparatus 121 comprises a base 122 fixed via column built from a floor surface FL, and an upward/downward movement unit 124 to be guided by a guide 123 attached to the base 122 and to be lifted and lowered by a driving apparatus (not shown). This upward/ downward movement unit 124 is provided with a rising/ lowering unit portion locking/gripping mechanism 125 for rotating the tie-plate 166 of the associated mobile vulcanizing unit 113, so as to couple and decouple the upper end plate 163 to and from the tie-rods 165 and to grip and release the upper end plate 163.

In the tire vulcanizing system 3, unvulcanized tires GT are received from the building system 2 and vulcanized synchronously with the building system 2, thereafter the vulcanized tires T are delivered to an inspecting system 4 for conducting inspection of tires synchronously with the systems 2, 3, and there will be explained a series of operations from receipt of an unvulcanized tire GT up to delivery of a vulcanized tire T with reference to FIG. 20.

The unvulcanized tire GT transported from the preceding process is placed on the unvulcanized tire-placing stand 116. After this unvulcanized tire GT is transferred to the bladder attaching/ detaching station 108 by the manipulator 175, there is attached a bladder B into this tire GT at the bladder attaching/detaching station 108 and then the unvulcanized tire GT having the bladder B attached thereto is transferred to the mold opening/closing station 112 by the tire transferring apparatus 114, at which time the mobile vulcanizing unit 113 from which the vulcanized tire T has been taken out is waiting in a state opening its vulcanizing mold 130 at the mold opening/closing station 112, so that another unvulcanized tire GT is set into this vulcanizing mold 130.

After the tire transferring apparatus 114 is withdrawn from the mold opening/closing station, the mold opening/closing apparatus 121 is lowered to thereby lower the rising/lowering unit portion 172 of the mobile vulcanizing unit 113, and the rising/lowering unit portion locking/gripping mechanism 125 and the hydraulic jack 169 are operated to thereby lock the rising/lowering unit portion 172 to the other portions of the mobile vulcanizing unit 113, thereby locking the rising/lowering unit portion 172 of the mobile vulcanizing unit 113 to another portion thereof.

Next, this mobile vulcanizing unit 113 is moved to the associated vulcanizing station 111 by the associated vulcanizing unit reciprocating driving apparatus 140, and the unvulcanized tire GT housed in the mobile vulcanizing unit 113 is vulcanized at the vulcanizing station 111. Upon completion of vulcanization, the mobile vulcanizing unit 113 is moved to the mold opening/closing station 112 by the vulcanizing unit reciprocating driving apparatus 140, and then the vulcanizing mold 130 is opened by the mold opening/ closing apparatus 121 of the mold opening/closing station 112 into a state where the vulcanized tire T can be taken out of the vulcanizing mold 130.

Thereafter, the vulcanized tire T is transferred from the mold opening/closing station 112 to the post-vulcanization treatment station 115 by the tire transferring apparatus 114, and this tire is subjected to a PCI treatment at the post-vulcanization treatment station 115. After completing the PCI treatment, the vulcanized tire T is again taken out of the post-vulcanization treatment station 115 by the tire transferring apparatus 114, and transferred to the bladder attaching/detaching station 108.

At the bladder attaching/detaching station 108, the bladder attached to the vulcanized tire T is detached therefrom, and this tire T is placed on the vulcanized tire-placing stand 117 by the manipulator 176 and this tire T is then transported to the next process.

Although the above-mentioned vulcanizing system 3 has distributed the function for vulcanizing tires, the function for opening and closing the vulcanizing molds 130, and the function for attaching/ detaching the bladders to/from tires among individual stations to thereby enhance operation rates of the functions, respectively, the vulcanizing system 3 may be configured with vulcanizing stations simultaneously having the remaining functions.

Further, although the vulcanizing stations have been disposed on an arc around the associated mold opening/closing station as a center in the above description, another arrangement is possible; for example, the vulcanizing stations may be disposed linearly.

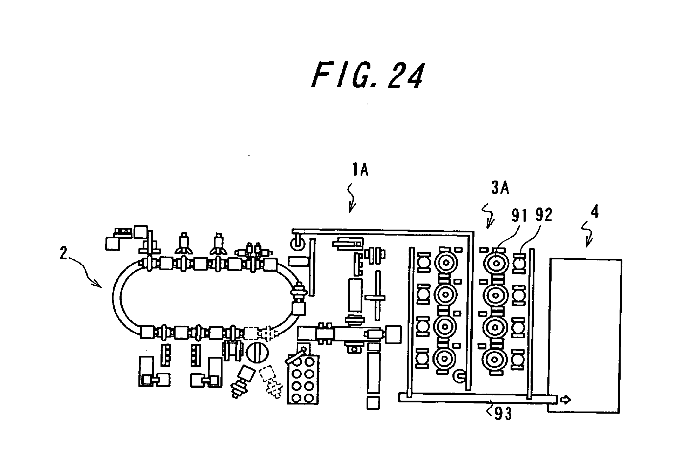

FIG. 24 is a plan arrangement view of an embodiment of another tire manufacturing system, and this manufacturing system 1A has a vulcanizing system 3A different from that in the above-mentioned embodiment.

The vulcanizing system 3A here comprises multiple vulcanizers 91 linearly arranged in two rows, and water-cooled PCI 92 arranged correspondingly to the vulcanizers, respectively. Upon vulcanization of tires by this vulcanizing system 3A, green tires received from the building system 2 are firstly delivered to the vulcanizers 91, respectively, where bladders are mounted to the green tires, and then vulcanizing molds attached to the vulcanizers 91 are closed to start vulcanization. After completion of vulcanization, the molds are opened at the vulcanizers, respectively, vulcanized tires are detached from the bladders, respectively, the tires are mounted to the water-cooled PCI 92, and they are subsequently conveyed to the inspecting system 4 by a delivery conveyor 93.

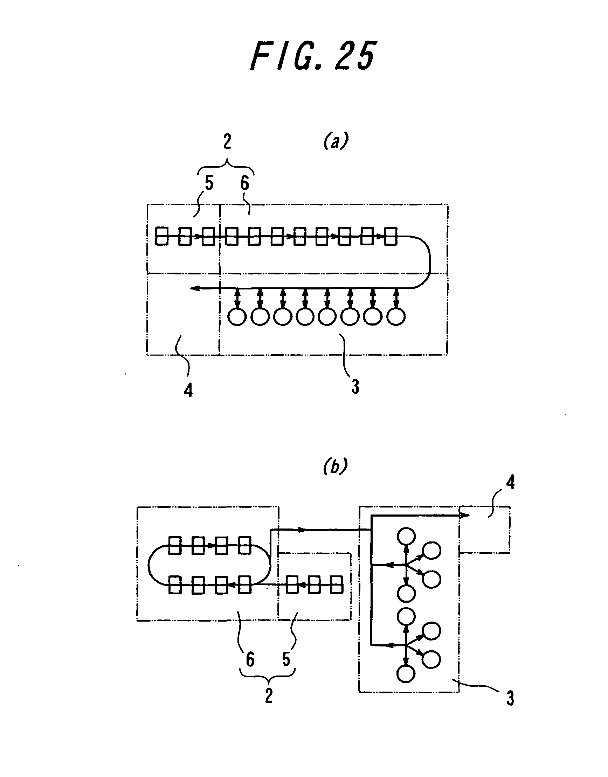

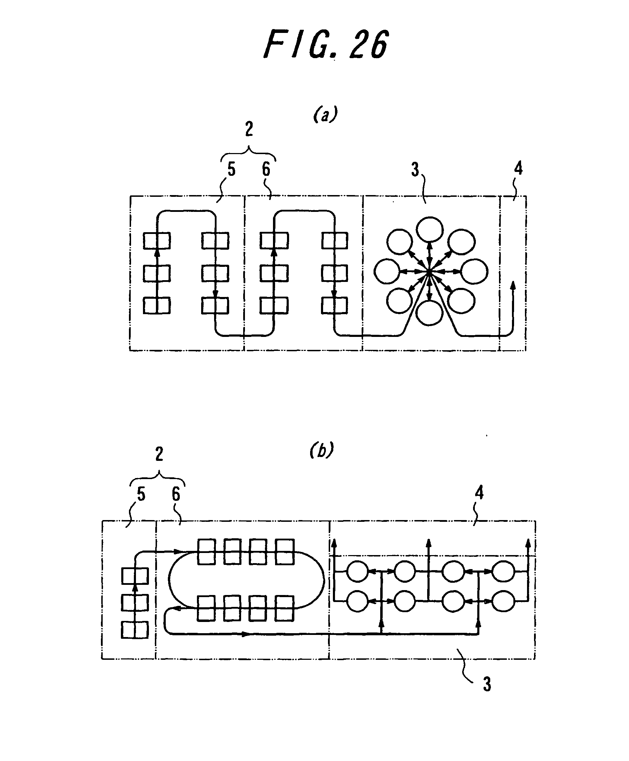

Further, in addition to the above-mentioned arrangement, other various arrangements are conceivable for the building system, vulcanizing system, and inspecting system in the tire manufacturing system according to the present invention, and arrangements of the workstations and vulcanizing stations within the respective systems are also additionally and variously conceivable. Arrangement examples of them are shown in FIG. 25(a), FIG. 25(b), FIG. 26(a), FIG. 26(b), FIG. 27(a), and FIG. 27(b), respectively.

In each of these figures, building workstations are each represented by a rectangle, vulcanizing stations are each represented by a circle, and flow directions of tires in the course of manufacturing are each represented by an arrow. Further, the reference numerals of the systems are common to all arrangement examples, so that reference numeral 2 designates a building system, 3 designates a vulcanizing system, 4 designates an inspecting system, 5 designates a first building unit of the building system, and 6 designates a second building unit.

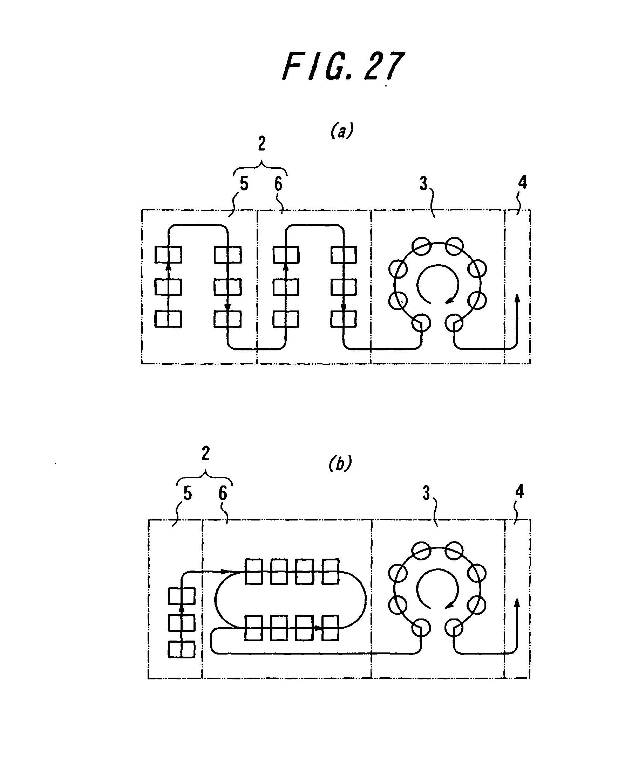

Note that the arrangement shown in FIG. 25(b) corresponds to that of the above-mentioned embodiment, and the vulcanizing systems shown in FIG. 27(a), FIG. 27(b) are to cause each vulcanizing station itself to move on an arc.

APPLICABILITY OF THE INVENTION

Thus, according to the tire building system of the present invention, each building carriage can be positioned with a higher precision relative to a direction intersecting the extending direction of a pair of endless rails, particularly under the operation of the carriage guiding means including, as main components, the endless rails, and the wheels provided at each building carriage and configured to be tightly engaged with at least opposite side surfaces of the endless rails, respectively, and under the operation of the arcuate portions of the endless rails configured to be narrower than the straight portions thereof; so that the working operations at the workstations can be conducted with a higher precision, by simply achieving a predetermined stopping position accuracy of each carriage; thereby fully excluding the necessity of equipment, time, and space, such as for the positioning and centering as previously noted with respect to the related art, and for transference of carriages as previously noted with respect to the proposed techniques, so that all the problems caused by such a necessity can be effectively solved.

Further, according to the other building system, since there is folded back a carcass band around associated bead cores by the associated toroidal building drum which is toroidally scalable to thereby allow for formation of a tire having the conventionally reliable structure; green tires can be manufactured with a higher precision, by mounting various tire components while bead cores are fixed at the associated building drum; and further, green tires are detached from the associated toroidal building drums, respectively, at the end of the building process, so that it is enough to heat only the green tires in the next vulcanizing process, thereby allowing avoidance of useless waste of energy and the like.

**Claims**

1. A tire building system (2) comprising a building unit (6), said building unit including:

    a toroidal building drum (21) having: a bead lock portion (21b) configured to fix a pair of bead cores; a scalable and displaceable rigid core body (21a) configured to support, from a radial inside, a carcass band (CB) toroidally bulged between said pair of bead cores; and a center bladder (21d) formed of a flexible material, which is arranged at a radial outside of the core bodies (21a), and which is toroidally bulged by supplying an internal pressure thereto;
    a building carriage (22) configured to rotatably support said toroidal building drum (21);
    workstations (F1-F9) configured to mount applicable tire components onto a tire in the course of building and having the bead cores locked by said toroidal building drum (21); and
    an endless or ended track (23) configured to guide a movement of said building carriage (22) among said workstations (F1-F9).

2. A tire building system as claimed in claim 1, further comprising a first building unit (5) configured to deliver a cylindrical carcass band (CB) to said building unit (6) as a second building unit;
    wherein said first building unit (5) comprises: a cylindrical building drum (11) configured to form the carcass band (CB); a building carriage (12) configured to rotatably support said cylindrical building drum (11); a plurality of workstations (C1, C2, C3) configured to mount applicable tire components (IL, CCH, SQ, P) onto said cylindrical building drum; and an endless or ended track (14) configured to guide a movement of said building carriage (12) among said workstation (C1, C2, C3).

3. A tire building system as claimed in claim 2, wherein said track (23) of said second building unit (6) is endless.

4. A tire building system as claimed in claim 3, wherein said track (23) has mutually substantially parallel straight portions, and said workstations (F1-F9) are arranged correspondingly to both said straight portions.

5. A tire building system as claimed in any of claims 2 to 4, wherein said track (14) of said first building unit (5) is straight.

6. A tire building system as claimed in any of claims 1 to 5, wherein a plurality of circumferentially arranged carcass folding-back bars (21c) are provided at right and left axial end portions of the toroidal building drum (21).

7. A tire manufacturing method, using the tire building system (2) of any of claims 1 to 6, for sequentially moving a tire, in the course of building, through a plurality of workstations (F1-F9) included in said tire building system (2) to thereby sequentially mount tire components previously determined correspondingly to the workstations (F1-F9), respectively, onto the tire to thereby build the same into a green tire, the method comprising the steps of:

    sequentially, at one or more of the workstations (F1-F9),
    disposing a cylindrical carcass band (CB) and a pair of bead cores onto a toroidally scalable toroidal building drum (21) to thereby lock the bead cores,
    radially expanding the toroidal building drum (21) to toroidally extend the carcass band between both bead cores, and
    turning back side portions of the carcass band to radial outsides around the bead cores, respectively, and
    thereafter, at another or other of the workstations (F1-F9),
    mounting tire components including sidewall members onto the carcass band and bead cores while the bead cores are kept locked on the toroidal building drum (21), to thereby build them into a green tire; and
    radially contracting the toroidal building drum, and unlocking the bead cores to detach the green tire from the toroidal building drum (21).

**Patentansprüche**

1. Reifenaufbausystem (2), das eine Aufbaueinheit (6) aufweist, wobei die Aufbaueinheit umfasst:

    eine ringförmige Aufbautrommel (21), die aufweist: einen Wulstklemmabschnitt (21b), der ausgebildet ist, um ein Paar Wulstkerne zu fixieren; einen skalierbaren und verschiebbaren starren Kernkörper (21 a), der ausgebildet ist, um von einer radialen Innenseite ein Karkassenband (CB) zu tragen, das ringförmig zwischen dem Paar Wulstkernen aufgewölbt ist; und einen mittleren Heizbalg (21d), der aus einem elastischen Material gebildet wird, der auf einer radialen Außenseite der Kernkörper (21a) angeordnet ist, und der ringförmig aufgewölbt wird, indem ein Innendruck darauf angewandt wird; einen Aufbauwagen (22), der ausgebildet ist, um drehbar die ringförmige Aufbautrommel (21) zu tragen; Arbeitsstationen (F1-F9), die ausgebildet sind, um brauchbare Reifenkomponenten auf einem Reifen im Verlauf des Aufbaus zu montieren, und bei denen die Wulstkerne durch die ringförmige Aufbautrommel (21) festgeklemmt werden; und eine endlose oder endliche Bahn (23), die ausgebildet ist, um eine Bewegung des Aufbauwagens (22) zwischen den Arbeitsstationen (F1-F9) zu führen.

2. Reifenaufbausystem nach Anspruch 1, das außerdem eine erste Aufbaueinheit (5) aufweist, die ausgebildet ist, um ein zylindrisches Karkassenband (CB) zur Aufbaueinheit (6) als eine zweite Aufbaueinheit zu liefern; wobei die erste Aufbaueinheit (5) aufweist: eine zylindrische Aufbautrommel (11), die ausgebildet ist, um das Karkassenband (CB) zu formen; einen Aufbauwagen (12), der ausgebildet ist, um drehbar die zylindrische Aufbautrommel (11) zu tragen; eine Vielzahl von Arbeitsstationen (C1, C2, C3), die ausgebildet ist, um brauchbare Reifenkomponenten (IL, CCH, SQ, P) auf die zylindrische Aufbautrommel zu montieren; und eine endlose oder endliche Bahn (14), die ausgebildet ist, um eine Bewegung des Aufbauwagens (12) zwischen den Arbeitsstationen (C1, C2, C3) zu führen.

3. Reifenaufbausystem nach Anspruch 2, bei dem die Bahn (23) der zweiten Aufbaueinheit (6) endlos ist.

4. Reifenaufbausystem nach Anspruch 3, bei dem die Bahn (23) einander im Wesentlichen parallele geradlinige Abschnitte aufweist und die Arbeitsstationen (F1-F9) entsprechend den beiden geradlinigen Abschnitten angeordnet sind.

5. Reifenaufbausystem nach einem der Ansprüche 2 bis 4, bei dem die Bahn (14) der ersten Aufbaueinheit (5) geradlinig ist.

6. Reifenaufbausystem nach einem der Ansprüche 1 bis 5, bei dem eine Vielzahl von peripher angeordneten Karkassenaufrollstäben (21c) am rechten und linken axialen Endabschnitt der ringförmigen Aufbautrommel (21) vorhanden ist.

7. Reifenherstellungsverfahren, bei dem das Reifenaufbausystem (2) nach einem der Ansprüche 1 bis 6 für ein sequentielles Bewegen eines Reifens im Verlauf des Aufbaus durch eine Vielzahl von Arbeitsstationen (F1-F9), die im Reifenaufbausystem (2) eingeschlossen sind, zur Anwendung kommt, um dadurch sequentiell die vorher bestimmten Reifenkomponenten jeweils entsprechend in den Arbeitsstationen (F1-F9) auf den Reifen zu montieren, um dadurch die gleichen zu einem Reifenrohling aufzubauen, wobei das Verfahren die folgenden Schritte sequentiell in einer oder mehreren der Arbeitsstationen (F1-F9) aufweist:

Anordnen eines zylindrischen Karkassenbandes (CB) und eines Paares von Wulstkernen auf einer ringförmig skalierbaren ringförmigen Aufbautrommel (21), um dadurch die Wulstkerne festzuklemmen; radiales Expandieren der ringförmigen Aufbautrommel (21), um das Karkassenband zwischen beiden Wulstkernen ringförmig auszudehnen; und Aufschlagen der Seitenabschnitte des Karkassenbandes auf die radialen Außenseiten jeweils um die Wulstkerne; und danach in einer anderen oder weiteren Arbeitsstation (F1-F9) die folgenden Schritte:

Montieren der Reifenkomponenten, einschließlich der Seitenwandelemente, auf das Karkassenband und die Wulstkerne, während die Wulstkerne festgeklemmt auf der ringförmigen Aufbautrommel (21) gehalten werden, um sie dadurch zu einem Reifenrohling aufzubauen; und radiales Zusammenziehen der ringförmigen Aufbautrommel und Lösen der Wulstkerne, um den Reifenrohling von der ringförmigen Aufbautrommel (21) abzunehmen.

**Revendications**

1. Système de confection de bandages pneumatiques (2), comprenant une unité de confection (6), ladite unité de confection englobant :

un tambour de confection toroïdal (21), comportant : une partie de verrouillage des talons (21b), configurée de sorte à fixer une paire de tringles ; un corps de noyau rigide extensible et déplaçable (21a), configuré de sorte à supporter, à partir d'un côté radial interne, une bande de carcasse (CB) débordant toroïdalement entre ladite paire de tringles, et une vessie centrale (21d), formée à partir d'un matériau flexible, agencée au niveau d'un côté radial externe des corps de noyau (21a) et débordant de manière toroïdale par suite de l'application d'une pression interne à celle-ci ;

un chariot de confection (22), configuré de sorte à supporter de manière rotative ledit tambour de confection toroïdal (21) ;

des stations de travail (F1-F9), configurées de sorte à monter des composants applicables du bandage pneumatique sur un bandage pneumatique au cours de la confection, les tringles étant verrouillées par ledit tambour de confection toroïdal (21) ; et

une piste sans fin ou finie (23), configurée de sorte à guider un déplacement dudit chariot de confection (22) entre lesdites stations de travail (F1-F9).

2. Système de confection de bandages pneumatiques selon la revendication 1, comprenant en outre une première unité de confection (5), configurée de sorte à transmettre une bande de carcasse cylindrique (CB) vers ladite unité de confection (6), constituant une deuxième unité de confection ;

dans lequel ladite première unité de confection (5) comprend : un tambour de confection cylindrique (11), configuré de sorte à former la bande de carcasse (CB) ; un chariot de confection (12), configuré de sorte à supporter de manière rotative ledit tambour de confection cylindrique (11); plusieurs stations de travail (C1, C2, C3), configurées de sorte à monter des composants applicables du bandage pneumatique (IL, CCH, SQ, P) sur ledit tambour de confection cylindrique ; et une piste sans fin ou finie (14), configurée de sorte à guider le déplacement dudit chariot de confection (12) entre lesdites stations de travail (C1, C2, C3).

3. Système de confection de bandages pneumatiques selon la revendication 2, dans lequel ladite piste (23) de ladite unité de confection (6) est sans fin.

4. Système de confection de bandages pneumatiques selon la revendication 3, dans lequel ladite piste (23) comporte des parties droites pratiquement parallèles l'une à l'autre, lesdites stations de travail (F1-F9) étant agencées de manière correspondante sur les deux dites parties droites.

5. Système de confection de bandages pneumatiques selon l'une quelconque des revendications 2 à 4, dans lequel ladite piste (14) de ladite première unité de confection (5) est droite.

6. Système de confection de bandages pneumatiques selon l'une quelconque des revendications 1 à 5, dans lequel plusieurs barres de repliement vers l'arrière de la carcasse à agencement circonférentiel (21c) sont agencées au niveau des parties d'extrémité de droite et de gauche du tambour de confection toroïdal (21).

7. Procédé de fabrication d'un bandage pneumatique, utilisant un système de confection de bandages pneumatiques (2) selon l'une quelconque des revendications 1 à 6, pour déplacer de manière séquentielle un bandage pneumatique, au cours de la confection, à travers plusieurs stations de travail (F1-F9) inclues dans ledit système de confection de bandages pneumatiques (2), pour monter ainsi respectivement de manière séquentielle des composants du bandage pneumatique déterminés auparavant, de manière correspondante dans les stations de travail (F1-F9), sur le bandage pneumatique afin de produire un bandage pneumatique cru à partir de celui-ci, le procédé comprenant les étapes ci-dessous :

de manière séquentielle, au niveau d'une ou de plusieurs des stations de travail (F1-F9), agencement d'une bande de carcasse cylindrique (CB) et d'une paire de tringles sur un tambour de confection toroïdal à extension toroïdale (21), pour verrouiller ainsi les tringles ;

extension radiale du tambour de confection toroïdal (21) pour étendre de manière toroïdale la bande de carcasse entre les deux tringles ; et repliement vers l'arrière respectif des parties latérales de la bande de carcasse vers les côtés radiaux externes autour des tringles ; et

ensuite, et au niveau d'une autre ou d'autres stations de travail (F1-F9),

montage de composants du bandage pneumatique, englobant des éléments de flanc, sur la bande de carcasse et les tringles, les tringles restant verrouillées sur le tambour de confection toroïdal (21) pour produire ainsi un bandage pneumatique cru ; et

contraction radiale du tambour de confection toroïdal et déverrouillage des tringles pour détacher le bandage pneumatique cru du tambour de confection toroïdal (21).

# FIG. 1

FIG.2

# FIG. 3

(a)

CCH    IL    CCH

11

(b)

SQ    CB    P

11

(c)

13a    PB    CB    PB    13a

13b    13b

11

# FIG. 4

(a)

(b)

# FIG. 5

(a)

(b)

# F I G. 6

(a)

(b)

# FIG. 7

(a)

BASE   ANT   BASE   21

(b)

CAP   ANT   CAP   21

# FIG. 8

(a)

(b)

# FIG. 9

(a)

EX   AP

R

+

DR

(b)

A1

t1

W1

(c)

A2

t2

W2

# FIG. 10

EP 1 568 475 B1

FIG. 11

# FIG. 12

# FIG. 13

# *FIG. 14*

# FIG. 15

FIG. 16

EP 1 568 475 B1

# FIG. 17

FIG. 18

EP 1 568 475 B1

FIG. 19

# FIG. 20

# FIG. 21

EP 1 568 475 B1

# FIG. 22

# FIG. 23

EP 1 568 475 B1

FIG. 24

41

# FIG. 25

(a)

(b)

# *FIG. 26*

*(a)*

*(b)*

# FIG. 27

(a)

(b)

**EP 1 568 475 B1**

### Patent documents cited in the description

- WO 0139963 A
- JP 002254529 A
- WO 0132409 A
- US 4443290 A
- JP 2002254529 A
- JP 2002326288 A
- EP 1295701 A